Europäisches Patentamt

(19) European Patent Office

Office européen des brevets

(11) **EP 0 661 926 B1**

## (12) EUROPEAN PATENT SPECIFICATION

(45) Date of publication and mention
of the grant of the patent:
**10.06.1998 Bulletin 1998/24**

(21) Application number: **93907424.1**

(22) Date of filing: **02.03.1993**

(51) Int. Cl.⁶: **A23G 3/30**

(86) International application number:
**PCT/US93/02222**

(87) International publication number:
**WO 93/17580 (16.09.1993 Gazette 1993/22)**

(54) **A WAX-FREE CHEWING GUM INCLUDING SPECIAL OLIGOSACCHARIDE BINDERS**

WACHSFREIE KAUGUMMI-ZUSAMMENSETZUNG MIT SPEZIELLEN BINDEMITTELN

GOMME A MACHER EXEMPTE DE CIRE ET RENFERMANT DES LIANTS OLIGOSACCHARIDES
SPECIAUX

(84) Designated Contracting States:
**DE DK FR GB IT**

(30) Priority: **03.03.1992 WO PCT/US92/01686**
**30.06.1992 US 906921**
**06.11.1992 WO PCT/US92/09615**
**29.12.1992 US 996914**
**29.12.1992 US 997876**
**30.12.1992 US 997732**
**30.12.1992 WO PCT/US92/11317**

(43) Date of publication of application:
**12.07.1995 Bulletin 1995/28**

(73) Proprietor:
**WM. WRIGLEY JR. COMPANY**
**Chicago Illinois 60611 (US)**

(72) Inventors:
• **YATKA, Robert J.**
  **Orland Park, IL 60462 (US)**
• **REED, Michael A.**
  **Merrillville, IN 46410 (US)**
• **BRODERICK, Kevin B.**
  **Berwyn, IL 60402 (US)**

(74) Representative:
**Allard, Susan Joyce et al**
**BOULT WADE TENNANT,**
**27 Furnival Street**
**London EC4A 1PQ (GB)**

(56) References cited:
| | |
|---|---|
| GB-A- 2 105 338 | US-A- 3 857 965 |
| US-A- 3 984 574 | US-A- 4 382 963 |
| US-A- 4 604 287 | US-A- 4 728 515 |
| US-A- 5 023 093 | US-A- 5 039 530 |

**Description**

FIELD OF THE INVENTION

The present invention relates to an improved wax-free chewing gum, and particularly to a new binder system for a wax-free chewing gum, which binder system includes special noncariogenic oligosaccharides.

BACKGROUND OF THE INVENTION

Waxes have traditionally been used in gum bases to present certain desirable characteristics in the resulting chewing gum product. Wax present in chewing gum bases and in chewing gums provides a number of functions in the gum base, for example, release of flavor, curing of the finished product, enhanced shelf life of the finished gum, and gum texture and softness.

Although the art contains teachings to wax-free gums, these gums typically provided different chew characteristics than those of gums created from wax-containing gum bases. Heretofore gum bases without wax, particularly petroleum waxes, were occasionally created to achieve specific ends, for example a non-tack gum. In these instances, compromises with respect to certain chewing gum characteristics, such as softness and chewability, may have been made to achieve other results such as non-tack or improved stability of certain ingredients. However, the art contains no teaching of how to achieve the desirable characteris-tics associated with wax, without using wax.

U.S. Patent No. 3,984,574 issued to Comollo, discloses an abhesive chewing gum base in which the non-tack properties avoiding adhesion to dental work were achieved by eliminating conventional chewing gum base ingredients having tackiness and by substituting non-tacky ingredients therefor. Materials contributing to gum tackiness included certain elastomers, certain resins, and waxes. Comollo eliminated certain naturally occurring elastomers and substituted in their place one or more non-tacky synthetic elastomers such as polyisobutylene, polyisoprene, isoprene-isobutylene copolymer and styrene-butadiene copolymers. Comollo also eliminated tack-producing natural resins and modified natural resins and used instead relatively high amounts of hydrogenated or partially hydrogenated vegetable oils or animal fats. Finally, Comollo completely excluded waxes from his gum base, but in the place of wax included polyvinylacetate, certain fatty acids, and mono- and di-glycerides of fatty acids.

The Comollo product did present a non-tack chewing gum of commercial success. The product did not contain oligosaccharide binding ingredients, other than syrups and normal binding ingredients known to the art. In U.S. Patent No. 5,039,530, Yatka et al., a storage stable chewing gum incorporating alitame as a sweetener was disclosed. In one embodiment of this patent, formulations were presented substantially free of wax. Yatka's chewing gum also did not contain the special noncariogenic oligosaccharides of this invention as binding agents.

In US 5023093 there is described a chewing gum base containing low melting point fat.

Also, a PCT Patent Application No. PCT/US92/01686, filed March 3, 1992 in the U.S. receiving office, and entitled "Improved Wax-Free Chewing Gum Base", naming Steven Synosky as the inventor, and a later PCT Patent Application No. PCT/US92/09615, Synosky et al., discloses certain wax-free gum bases which attempted to relieve the negative perception created in the United Kingdom concerning the use of petroleum waxes in chewing gums. Additionally, a continuation in part of this PCT Patent Application, U.S. Patent application Serial No. 07/906,921, was later filed, which application taught improved wax-free gum bases and chewing gums made thereof; which teachings included the substitution of increased amounts of certain fats and oils to provide chewing gum characteristics lost by removing waxes. None of these applications, all of which are incorporated herein by reference, contained the oligosaccharides of this invention as a binding agent. Since the removal of wax, particularly petroleum waxes, has caused the loss of desirable chewing gum characteristics such as softness and chewability, the art has sought a replacement to recover these characteristics. In addition, use of common binding agents such as corn syrup or the use of increased gum base levels were needed to improve the structure of the final product. In some cases this provided binding, but lost storage stability, and involved increased cost.

There was an obvious need for a method of removing wax from gum bases without compromising the characteristics of the resulting gum. Likewise there was a need for chewing gums which were wax-free, particularly petroleum wax-free and exhibited the characteristics of gums that included wax. Similarly, there was a need for processes and ingredient combinations that could provide wax-free gums and provide processing characteristics for these wax-free gums, which gums had the desirable characteristics of wax-containing gums.

According to the present invention there is provided a petroleum wax-free chewing gum comprising: a petroleum wax-free gum base, containing from 1 to 40 wt. % fats and oils; water soluble chewing gum ingredients, sweetener comprising an admixture of at least one high-intensity sweetener at least 20 times sweeter than sucrose and at least one bulk sweetener selected from the group consisting of sorbitol, mannitol, xylitol, maltitol, lactitol, hydrogenated isomaltulose, and hydrogenated starch hydrolysate; and from 5 to 90% by weight of the chewing gum, of a noncariogenic oligosaccharide based binder system which includes at least about 35% of at least one noncariogenic oligosaccharide by weight of the binder system selected from the group consisting of indigestible dextrins, polydextroses, oligofructoses, isomaltulose oligosaccharides, and fructooligosaccharides, guar gum hydrolysates, hydrolyzed alginates, hydrolyzed gums, hydrolyzed cellulose or mixtures thereof; wherein the binder system causes the chewing gum to at least retain the chew characteristics of a chewing gum having wax.

The chewing gum comprises at least one oligosaccharide having noncariogenic characteristics and which is poorly metabolized. By poorly metabolized, we mean that organisms involved in digestive studies derive less than, and often considerably less than, 2.3 calories per gram of ingested oligosaccharide. By noncariogenic we mean that the degree of tooth decay, or dental caries, is less than that observed with sucrose, dextrose, or corn syrup sweeteners. This can reflect the fact that the oligosaccharides are poorly utilized by streptococcus mutans, an organism found in the human mouth which can form plaque and acids, leading to caries.

These specialized noncariogenic oligo-saccharides also have an average degree of polymeri-zation ranging from at least 3 to about 50, or in some cases, as high as 100, and preferably are low-calorie oligosaccharides. Our specialized oligosaccharides preferably are formed from sugar bases, predominantly other than maltooligosaccharide bases.

These noncariogenic oligosaccharide binders may be combined with any wax-free gum base, particularly petroleum wax-free gum bases to provide for a chewing gum that is free of petroleum waxes, has high binding characteristics has excellent chewability and also presents the optional opportunity to provide a low-calorie wax-free chewing gum with desirable processing and chew characteristics.

The gum base useful in the invention can include quantities of one or more elastomers, which elastomers may be synthetic, natural, or mixtures thereof. Additionally, the gum bases of the invention may include optional elastomer plasticizers, optional natural waxes and also include ingredients such as fillers, softeners, fats, oils, synthetics, colors, whiteners, antioxidants, and emulsifiers.

The present invention provides a petroleum wax-free gum retaining desirable characteristics of chewing gum having wax and also providing for binding characteristics which enhance processing and manufacturing as well as sensory properties of the chewing gum.

Our improved chewing gum is a petroleum wax-free chewing gum comprising

a) a petroleum wax-free gum base;
b) a binder system, wherein the binder system comprises at least 35 weight percent of at least one noncariogenic oligosaccharide;
c) sweeteners, and
d) flavor ingredients.

Other optional ingredients may be added, and include, but are not limited to, bulking agents, synthetic softeners such as glycerin, emulsifiers, colors and whiteners, pharmaceutical agents, antioxidants, flavor enhancers, food acidulants, and the like.

In our petroleum wax-free chewing gums, the petroleum wax-free gum base comprises from 10 weight percent to 90 weight percent of the chewing gum composition, preferably from 15 to 75 weight percent, and most preferably from 20 to 50 weight percent of the chewing gun.

The binder system described above comprises 5 to 90 weight percent of the chewing gum composition, preferably from 10 to about 80 percent, and most preferably from 15 to 70 weight percent of the chewing gum composition. The sweeteners are contained in the chewing gum composition from 0.001 to 70 weight percent, with sweetener selection and amount depending upon whether or not low-calorie, intermediate calorie, or normal calorie chewing gums are being formulated.

The flavor ingredients are contained in the gum from 0.01 to 10 weight percent, preferably from 0.05 to 7.5 weight percent, and most preferably from 0.1 to 6.5 weight percent.

The optional ingredients listed above can be contained in the chewing gum from 0 to 40 or more weight percent, preferably from 0.01 to 40 weight percent.

Preferably, the chewing gum of our invention contains a petroleum wax-free gum base which comprises:

a) elastomers making up from 10 to 90 weight percent of the gum base;
b) elastomer solvents or plasticizers making up from 0 to 50 weight percent of the gum base;
c) fats and oils, and/or other so-called softeners, making up from 1 to 40 weight percent of the gum base;
d) fillers and texturizers making up from 0.5 to 40 weight percent of the gum base;
e) certain vinyl polymers making up from 0.5 to 40 weight percent of the gum base; and
f) emulsifiers, colorants, whiteners, antioxidants or other miscellaneous ingredients making up from 0.1 to 5 weight percent of the gum base.

Also, certain natural waxes, such as beeswax and carnauba wax, may be used in our gum bases ranging from 0 to 5 weight percent of the gum base. Most preferably, our gum base contains no natural waxes.

As a person familiar with the art will recognize, the petroleum wax-free gum bases described above can be non-tack gum bases or can, in fact, be gum bases having some significant degree of tack to dental work surfaces and appliances. The chewing gums obtained by using the wax-free gum bases described above, with our selected binders, can be non-tack, tacky, high calorie, low calorie, and may be bubble gums, regular chewing gums, or specialty gums, for example those gums having perceived breath freshening qualities, or those gums containing certain pharma-ceutical agents, such as, for example, aspirin.

The elastomer solvents or elastomer plasticizers that are present in the wax-free gum bases above are optionally present, but when present normally provide for some tackiness in the formulation. Similarly, natural waxes, when present in our petroleum wax-free gum bases may provide for certain tackiness, but also provide softness and chewability to our formulations.

When the goal for our petroleum wax-free chewing gums includes a low-calorie chewing gum, we prefer to replace any high-calorie bulking agents with low-calorie bulking agents and binders, such as the oligosaccharides used as binding agents in this invention. Merely increasing the amount of our specialized oligosaccharides, or combinations thereof, provides this benefit.

When the goal for the chewing gum does not include low-calorie chewing gums such that an intermediate or normal calorie product is desired, bulking agents such as sucrose, glucose, sorbitol, xylitol, and the like, and conventional binders such as hydrogenated starch hydrolysates, corn syrups, polyol syrups, and the like can be included in the formulations.

Because the petroleum wax-free gum base preferably contains no waxes, except for some possible use of certain relatively small quantities of natural waxes, or trace levels of petroleum waxes which may be added incidentally with other gum base ingredients, the chewing gum manufactured therefrom has a tendency in production to not bind the components later added to the gum base formulation. These components may comprise the sweeteners, bulking agents, flavor ingredients and certain of the optional ingredients as listed above. We have discovered that the use of certain oligosaccharides as binding agents, and more particularly the use of binding agents containing a prescribed minimum amount of these oligosaccharides, provides an advantage in the manufacture of and to the sensory characteristics of the final chewing gum product made using these oligosaccharide based binders.

The binders, or the binder system, comprise at least 35 weight percent, by weight of the total binder system, of at least one noncariogenic oligosaccharide which is poorly metabolized in the human gut. The binder system preferably comprises from 40 weight percent up to 100 weight percent of at least one of these noncariogenic oligosaccharides.

In general, any noncariogenic oligosaccharide can be used in this invention. To be noncariogenic, the oligosaccharide has the characteristic of being poorly utilized by streptococcus mutans. Preferably, the binding agents are both noncariogenic and low-calorie oligosaccharide products. These noncariogenic oligosaccharides have an average Degree of Polymeri-zation (DP) of at least 3, and preferably at least 5. Most preferably, the oligosaccharides useful in our binders have Degrees of Polymerization ranging from 3 to 50, perhaps as high as 100. The preferred noncariogenic oligosaccharides include the fructooligosaccharides, the indigestible dextrins, oligofructoses, isomaltulose oligosaccharides and polydextroses, but may also include certain guar gum hydrolysates, a polymer of mannose and galactose (about 2:1 mole ratio respectively), hydrolyzed alginates, certain other hydrolyzed gums or hydrolyzed cellulosics having an average degree of polymerization of at least 3, and preferably an average degree of polymerization of at least 5. Degree of Polymerization is the number of repetitive sugars, either the same or different sugars, or their residues present in the oligo-saccharide. An average Degree of Polymerization is a number average of all such oligosaccharides in a particular population of oligosaccharides.

The specialized noncariogenic oligo-saccharides of our invention most preferably are those having repeating sugar bases which are not, or at least predominantly not maltooligosaccharides having the so-called $\alpha$1,4 dextrose-dextrose repeating sugar linkages.

One such noncariogenic oligosaccharide is oligofructose, an inulin-oligosaccharide. Oligo-fructoses are oligosugars primarily containing repetitive fructose units bonded to each other, often with at least one glucose molecule attached at the end. Inulin or oligofructoses belong to the group of poly- or oligofructoses which are naturally occurring in about 30,000 different plant species. After starch, the fructose based polysugars are the most abundant non-cellulosic carbohydrate.

Inulin is a long chain oligofructose found in many plant species. After extraction inulin may be hydrolyzed enzymatically to lower molecular weight carbohydrates, which are the inulin oligosaccharides. Both inulin and inulin oligosaccharides, and admixtures thereof, are useful as the oligofructoses of this invention.

Oligofructose agents are not yet approved for use in human food products or in chewing gum in the United States, but a pending GRAS status has been achieved. In Belgium, Luxembourg, France, The Netherlands, Denmark and Japan, oligofructose is already considered a foodstuff. Although a sugar, oligofructose may not contribute significantly to dental caries, contributes to dietary fiber, and does not significantly contribute to calories. Thus, this ingredient's use in the wax-free chewing gums of this invention is a definite improvement.

4

U.S. Patent No. 3,894,146 discloses a coupling sugar called oligoglucosyl fructose derived from other sugars.

Fructosyl oligomers and oligosaccharides are disclosed in U.S. Patent No. 4,978,751, EPO Patent Publication No. 0 301 628 and EPO Patent Publication No. 0 337 889.

Oligofructose type of fructose compounds were first disclosed in U.S. Patent No. 2,782,123. The material was useful as a bulk sweetener and may be obtained from Jerusalem artichoke tubers which contain significant amounts (5-20%) of inulin. Also disclosed is the inulin treated by acid hydrolysis.

Another company, Raffinerie Tirlemontoise SA, has developed an oligofructose from chicory root, which also contains about 5-20% inulin. The naturally occurring inulin is extracted from the root, purified, and dried. This product has the trade name Raftiline. A lower molecular weight material, called Raftilose, is made by enzymatic hydrolysis of Raftiline.

Another noncariogenic oligosaccharide useful in the binding agents of our invention includes a material referred to as polydextrose. Polydextrose provides bulking capabilities as well as binding capabilities in our formulations. This polydextrose binding agent is approved for using in human food products and in chewing gums in the United States and also in countries in Europe and Japan. Polydextrose is a randomly bonded condensation, or a recombined, polymer of dextrose containing minor amounts of bound sorbitol and citric acid. Although referred to as a carbohydrate, polydextrose does not contribute to dental caries and does not cause as significant gastrointestinal disturbances as polyols, and finally does not significantly contribute to calories.

In 1973, Pfizer, Inc. of New York disclosed the manufacture of unique polyglucose compounds (polydextrose) compounds and their method of prepara-tion in U.S. Patent No. 3,766,165.

The use of polydextrose has been disclosed in various food products in EPO Patent Publication No. 0 438 912, U.S. Patent No. 4,802,924, U.S. Patent No. 4,528,206 and U.S. Patent No. 5,009,900.

The use of polydextrose has also been disclosed in chewing gum formulations in EPO Patent Publication No. 0 252 874, U.S. Patent No. 4,765,991, EPO Patent Publication No. 0 398 465, U.S. Patent No. 5,066,511, Japanese Patent Publication No. 86 173748 and U.S. Patent No. 4,382,963.

When polydextrose was first introduced into the market, the product had poor flavor quality. As a result, several patents disclosed methods of improving its quality. These are Japanese Patent Publication No. 91 020301 and U.S. Patent No. 4,948,596.

Pfizer, Inc. of New York has recently introduced a premium version of polydextrose that has improved flavor quality and is marketing its polydextrose under the tradename "Litesse."

Another noncariogenic oligosaccharide useful as a binding agent in our invention is referred to as indigestible dextrin. These indigestible dextrins, varieties of which are sold under the trade name Fibersol, have recently obtained a GRAS rating from the United States Food and Drug Administration. This material is approved for use in Japan.

Although a carbohydrate, indigestible dextrin does not contribute to dental caries, i.e. is noncariogenic, does not cause gastrointestinal disturbances and does not contribute to calories. Thus, this ingredient's use as a binder in chewing gum could be a definite improvement.

The manufacture of indigestible dextrin is disclosed in EPO Patent Publication No. 0 368 451, and its method of preparation is disclosed in other related patents. These are Japanese Patent Applications Nos. 02/100695; 02/145169; 02/154664; 91-047831 and 91-047832.

Additional information is supplied by a brochure from Matsutani Chemical Industry Co., Ltd. of Japan, titled "Basic Properties of Fibersol-2." Fibersol is a tradename for Matsutani Company's indigestible dextrin product.

A similar type material, starch hydrolysate dextrin, is disclosed in U.S. Patent No. 3,974,032. The product is a low DE starch hydrolysate of improved stability prepared by enzymatic hydrolysis of dextrins.

Yet another noncariogenic oligosaccharide is palatinose, a product available from Palatinit Sussungsmittel G.m.b.H., a German company. Palatinose may also be referred to as isomaltulose, a generic description of this product. Palatinose or isomaltulose is a reducing disaccharide with an $\alpha$1,6 bond between glucose and fructose. This bulking agent is not approved for use in food products in the United States at the present time, but is being considered by the U.S. FDA for GRAS affirmation. This material is approved for use in Japan and is being used in chewing gum there. Although technically an oligosugar, isomaltulose does not contribute to dental caries, i.e. is noncariogenic, nor does it cause gastrointestinal disturbances, and the use of this ingredient provides for definite improvements in chewing gums.

Preferably, the isomaltulose oligo-saccharides, that is, those polyisomaltuloses having a degree of polymerization of at least 3, may be selected as the binding agents of this invention. These isomaltulose oligosaccharides are also available commercially and are referred to as palatinose oligosaccharides, or POS. POS, on a dry solids basis, is 48% palatinose and 50% oligosaccharides based on palatinose repolymerization with citric acid. POS is also noncariogenic.

The manufacture of isomaltulose is disclosed in UK Patent No. 2,063,268, Japanese Patent No. 87-148496, and U.S. Patent No. 4,359,531.

UK Patent No. 2,066,639 discloses the replacement of sucrose with isomaltulose in various food type products.

Combinations of isomaltulose with high-potency sweeteners are disclosed in EPO Publication No. 0,390,438 (using sucralose) and Japanese Patent No. 83-138355 (using aspartame).

Results of cariogenic studies of isomaltulose are disclosed in U.S. Patents Nos. 4,556,429, 4,587,119 and 4,695,326. Isomaltulose inhibits the formation of insoluble glycan from sucrose and thus reduces dental plaque.

The use of isomaltulose in chewing gum is disclosed in Japanese Patent No. 89-019860.

Other patents disclose how bulking agents may be used in chewing gum to modify texture, flavor, caloric and shelf life properties.

For example, U.S. Patent No. 4,983,405 discloses the method of adding bran fiber to chewing gum to reduce calories.

U.S. Patent No. 4,980,177 discloses a high gum base, lows bulking agent composition giving a low caloric, saliva stimulating chewing gum using sodium carboxymethyl cellulose carrier.

U.S. Patent No. 4,961,935 discloses a composition of anhydrous chewing gum containing a non-hygroscopic bulking agent called Palatinit®, which is hydrogenated isomaltulose. Palatinit is a registered, tradename of Palatinit Sussungsmittel G.m.b.H.

U.S. Patent No. 4,786,722 discloses D-Tagatose as a naturally occurring bulking agent for use in chewing gum.

U.S. Patent No. 4,765,991 discloses the use of polydextrose with a PVA base in a reduced calorie chewing gum. U.S. Patent No. 4,382,963 discloses polydextrose used in chewing gum with snack type flavors.

PCT Publication No. 90-006317 discloses the use of crystalline lactitol monohydrate sweetener as a sugar replacement for dietetic foods, including chewing gum.

EPO Publication Nos. 0,351,972 and 0,351,973 disclose the use of sweet and non-sweet bulking agents in a savory, meat-like flavored chewing gum.

EPO Publication No. 0,325,090 discloses a sugarless anhydrous chewing gum containing maltitol.

As many U.S. patents and other patent applications are presented above, the use of isomaltulose oligosaccharides, i.e., palatinose oligosaccharides or POS, or hydrolyzed and/or hydrogenated isomaltulose oligosaccharides, or hydrolyzed or hydrogenated POS, in chewing gums does not appear to be disclosed as a binding agent in a wax-free gum formulation.

Another noncariogenic oligosaccharide is known as the fructooligosaccharide, or FOS. The difference between FOS and inulin oligosaccharides is that FOS is made by enzymatically adding fructose molecules to a sucrose molecule to obtain FOS, whereas inulin oligosaccharides are based on inulin from plants, wherein the inulin is hydrolyzed or broken down to smaller degrees of polymerization, hence lower molecular weight oligofructoses.

Fructooligosaccharides (FOS) are disclosed in U.S. Patent Nos. 4,902,674; 4,987,124; and 5,032,579 as a method and composition for inhibiting the growth of Salmonella. Fructooligosaccharides are also disclosed in EPO Patent Publication No. 0 397 027 and Japanese Patent No. 3-095102 in a method for killing pests. U.S. Patent No. 4,681,771 discloses a low caloric, low cariogenic sweetener comprising oligosaccharides having from 1 to 4 molecules of fructose bound to sucrose. The use of the sweetener in chewing gum is described. The patent is assigned to the Japanese firm of Meiji Seika Kaisha, who have joined forces with Coors Biotech, Inc. to manufacture and market a FOS product under the tradenames Neosugar, or NutraFlora.

PCT Application Serial No. PCT/US91/07172, filed September 30, 1991, discloses the use of fructooligosaccharides (FOS) in chewing gums, but does not contemplate the use of petroleum wax-free bases in these chewing gums.

Fructooligosaccharide is a binding agent having bulking capabilities and some bulk sweetener capabilities but as of this filing is not approved for use in human food products or chewing gum in the United States. A GRAS affirmation petition for FOS is being prepared and the bulk product is approved for use in Japan and is being used in a variety of foods. Although technically a sugar, FOS does not contribute to dental caries, does not cause as significant gastrointestinal disturbances as the polyols and does not significantly contribute to calories.

FOS is used in Japan as a sweetening agent, flavor enhancer, bulking agent and humectant. The product is also added to Japanese "health foods" to promote the growth of "beneficial" bacteria in the lower gastrointestinal tract.

Another special oligosaccharide useful as binding agents in our wax-free chewing gums comprises Guar Gum Hydrolysate (GGH). This binder is not approved for use in human food products or in chewing gum in the U.S. However, a GRAS affirmation petition for GGH as a human food ingredient is currently being prepared. The bulk sweetener is approved for use in Japan and is being used in a variety of foods. Although a sugar, GGH does not contribute to dental caries, does not cause as significant gastrointestinal disturbances as polyols and does not significantly contribute to calories. Thus, this ingredient's use in chewing gum could also be a definite improvement.

Guar gum, which is found in the seeds of two leguminous plants, has found extensive uses as a food additive. U.S. Patent No. 3,843,818 discloses low caloric pastas made with guar gum. In U.S. Patent No. 3,996,389, guar gum has been used as a stabilizer for ice cream, ice milk and sherbet. Culinary mixes containing guar gum are disclosed in U.S. Patent No. 3,161,524. A process for producing low odor, low taste guar gums useful in foods is described in U.S. Patent No. 3,455,899. Use of guar gum in chewing gum is disclosed in Japanese Patents Nos. 85-224449 and 87-146562.

Guar gum is a high molecular weight polysaccharide which, when dissolved in water, forms very high viscosity solutions or gels at low concentrations. Due to the molecular weight and resulting high viscosity aqueous solutions, guar gum has found only limited utility as a bulking agent for food.

In order to make guar gun more suitable for foods, it needs to be hydrolyzed to obtain a guar gum hydrolysate. A guar gum hydrolysate made by acid hydrolysis and its use in foods is disclosed in EPO 0 449 594. An enzymatically hydrolyzed guar gum is described at a seminar given by IBC USA Conferences, Inc. (International Business Communications in Atlanta, Georgia on March 13-14, 1991). Information on guar gum hydrolysate is disclosed in the manual from the seminar and is available from IBC USA Conferences, Inc., 8 Pleasant Street, Bldg. D, South Natick, Mass.

An enzymatically hydrolyzed guar gum is produced by Taiyo Kagaku Co., Ltd. and is being marketed in the U.S. by Sandoz Nutrition Corp. of Minneapolis, Minnesota under the trade name Sunfiber or Benefiber. Sunfiber has been described as a copolymer of mannose and galactose having an average molecular weight about one-tenth that of the starting guar gum. The ratio of mannose to galactose is about 2:1 in the Sunfiber product. To obtain the product, Sunfiber, guar gum is hydrolyzed by the enzyme β, D-mannanase from Aspergillus niger, is refined by activated carbon, sterilized, and spray dried. Sunfiber is a white powder, soluble in cold water, and the solution is colorless transparent, and almost sweetless. Viscosity of Sunfiber solution is much lower than guar gum. A viscosity of 10% Sunfiber solution is about 10 cps, as compared to 3,000 cps of a 1% guar gum solution.

Each of the patents and patent applications, articles and booklets, cited above are incorporated herein by reference.

In accordance with the invention, a chewing gum base and a chewing gum which are both free of petroleum waxes is provided for use in either a non-tack or a conventional chewing gum, which gum may be either a bubble gum, a specialty gum, or a regular chewing gum.

The gum base useful in manufacturing the chewing gums of the invention contains from 10 to 90 weight percent elastomers, preferably from 15 to 75 weight percent elastomers. The gum bases also contain from 0 to 50 weight percent elastomer solvent or elastomer plasticizers, preferably from 0 to 40 weight percent; and from 1 to 40 weight percent fats and oils, preferably from 5 to 30 weight percent, and/or other softeners. The gum bases also contain from 0.5 to 40 weight percent fillers and/or texturizers, preferably from 1.0 to 30.0 weight percent fillers, and from 0.5 to 40 weight percent vinyl polymers, preferably 1 to 30.0 weight percent vinyl polymers, and from 0.1 to 5 weight percent emulsifiers, colorants, whiteners, antioxidants or other miscellaneous ingredients, preferably 0.5 to 3.5 weight percent of these ingredients. The gum base may optionally contain from 0 to 5 percent natural waxes, and preferably from 0 to 3.5% natural waxes. Most preferably, natural waxes are not used.

In the gum base above, no petroleum waxes are used. When natural waxes are optionally used, they are used in relatively low concentrations, normally not exceeding 5 weight percent of the gum base.

The elastomers that can be used in our wax-free gum bases include, but are not limited to, synthetic elastomers such as styrene-butadiene copolymers, polyisoprene, polyisobutylene, isobutylene-isoprene copolymer, sometimes referred to as butyl elastomer, and natural elastomers or rubbers, such as smoked or liquid latex, guayle, perillo, nispevo, rosindinha, chiquibal, Crown gum, dendare, niger gutta, tunu, chilte, chicle, jelutong, balata, guttapercha, lechi caspi, sorva, or mixtures and/or blends thereof. Preferably the elastomers are selected from synthetic elastomers such as styrene- butadiene copolymers having a mole ratio of styrene to butadiene ranging between 3:1 to 1:3 and a weight average molecular weight ranging from 10,000 to 200,000. The elastomer can also be polyisoprene having a weight average molecular weight ranging from 10,000 to 200,000, polyisobutylene having a weight average molecular weight ranging from 10,000 to 200,000, isobutylene isoprene copolymer having a mole ratio of isobutylene to isoprene ranging from 20:1 to 1:20 and a weight average molecular weight ranging from 10,000 to 100,000 or mixtures of these synthetic elastomers. The elastomers may be blended in the same gum base, or in different gum bases which are then mixed to form our chewing gum products.

The synthetic elastomers may also be blended with other synthetic elastomers or with natural elastomers as listed above.

Our wax-free gum bases may optionally contain an elastomer solvent, sometimes referred to as an elastomer plasticizer, of from 0 to 50 weight percent of the total gum base composition. These elastomer plasticizers may include, but are not limited to natural resin esters such as the glycerol esters of partially hydrogenated resins, the glycerol esters of polymerized resin, the glycerol esters of partially hydrogenated resin, the glycerol esters of resin, the pentaerythritol esters of partially hydrogenated resins, methyl and partially hydrogenated methyl esters of resin, pentaerythritol esters of resin; and synthetic plasticizers such as terpene resins derived from alpha pinene, beta pinene, and/or d-limonene; and any suitable combinations of these materials. The preferred elastomer plasticizer is also very dependent on the specific application and on the type of elastomer which is used. For example, the terpene resins used either entirely or in part to replace ester gums cause most gum bases to become less tacky.

The fats and oils or other softeners and emulsifiers used in the invention may include tallow, hydrogenated tallow, hydrogenated and partially hydrogenated vegetable oils, cocoa butter, glycerol monostearate, glycerol triacetate, lecithin, mono-, di-, and tri-glycerides, acetylated monoglycerides, fatty acids including but not limited to stearic acid, palmitic acid, oleic acid, linoleic acid, lauric acid, myristic acid, arachidic acid, linoleic acid, caproic acid, caprylic acid, butyric acid, decenoic acid, gadoleic acid, or mixtures thereof. Often simple methyl or ethyl esters, or pentaerythritol esters of these fatty acids may also be used. Hydrogenated vegetable oils are generally preferred either alone or in combination with other fats and oils or softeners and are present in the formulation at least in part to compensate for the removal of petroleum waxes.

Other synthetic softeners may also be added and are included in the fatty and oil portion of the above formulation. The synthetic softeners can include, but are not limited to, glycerin, glycerol triacetate, acetylated monoglycerides, and the like.

Our wax-free gum base also contains fillers or texturizers. These fillers or texturizers are present within the range of 0.5 to 40 weight percent, preferably from 1.0 to 25.0 weight percent and are selected from water insoluble organic or inorganic compounds such as, but not limited to, calcium carbonate, ground limestone, magnesium silicate, aluminum silicate, silicas, aluminas, talc, titanium dioxides, mono-, di- and tri-calcium phosphates, cellulosics, and clays. These fillers or texturizers may also be used in combination one with the other as described above.

Our wax-free gum bases may also contain vinyl polymers which vinyl polymers are present within the range of 0.5 to 40 weight percent, preferably within the range of 1.0 to 30 weight percent, and most preferably between the range of 2.0 and 20 weight percent. These vinyl polymers are primarily represented by polyvinylacetate, partially hydrolyzed polyvinylacetate, polyvinyl alcohols, and copolymers of vinyl acetate and vinyl laurate, or any admixture thereof. The polyvinylacetates and partially hydrolyzed polyvinylacetates normally have a weight average molecular weight ranging from 2,000 to 100,000, and the copolymers of vinyl acetate and vinyl laurate normally have an average molecular weight ranging from 1,000 to 100,000. When partially hydrolyzed polyvinylacetates are used, the degree of hydrolysis ranges from 10 percent to 90 percent, preferably from 20 percent to 80 percent. When copolymers of vinylacetate and vinyl laurate are used, they normally contain a vinyl laurate content ranging from about 5 to about 50 weight percent of the copolymer, and they preferably have a weight average molecular weight ranging from 2,000 to 80,000. In addition to the vinyl polymers mentioned above, the vinyl polymers can also include polyethylenes, polypropylenes, or polybutylenes having a weight average molecular weight ranging from 1,000 to 50,000, although those materials are normally sparingly used, and when used are preferably used in combination with the other vinyl polymers above.

Colorants and whiteners may include FD&C type dyes and lakes, fruit and vegetable extracts, titanium dioxide, cocoa powder, or combinations thereof.

When natural waxes are used in our formula-tion, they are normally selected from the group consisting of candelilla wax, carnauba wax, ozoberite, oricury, beeswax, rice bran wax, Japan wax, and jojoba wax. Other natural waxes can also be used in combina-tion with the above or by themselves. The above listed waxes may also be used in combination one with the other or in multiple combinations if needed. Preferably, the waxes are formulated within the gum base at from 0.0 weight percent to 3.5 weight percent of the gum base, using at least one natural wax from the group above. Most preferably, no natural waxes are used.

The petroleum wax-free gum bases most preferably contain from 15 to 75 weight percent elastomer, from 0 to 40 weight percent elastomer plasticizer, from 5 to 30 weight percent fats, oils and softeners, from 2.0 to 20 weight percent fillers and texturizers, from 2.0 to 20 weight percent vinyl polymers, from 0.5 to 3.5 weight percent emulsifiers, colorants, whiteners and antioxidants, and from 0.0 to 3.5 weight percent natural waxes.


THE PETROLEUM WAX-FREE CHEWING GUMS


The petroleum wax-free gum bases are used to manufacture our wax-free chewing gums. In the wax-free chewing gum formulation, the petroleum wax-free gum base is blended with a bender system where the binder system comprises at least 35 weight percent by weight of the total binder system of at least one noncariogenic oligosaccharide, as described in detail above, and with sweeteners and flavor ingredients. The oligosaccharides are preferably, both noncariogenic and poorly metabolized, which means the oligosaccharides contribute less than and often significantly less than 2.3 calories/grams of oligosaccharides to the metabolizing organism, including but not limited to streptococcus mutans, an organism involved in producing caries. Other optional ingredients and materials may also be added. Preferably, our chewing gums contain from 15 to 75% gum base and 10 to 80% of the binder system, where the binder system is from 40 to 100 weight percent of the noncariogenic oligosaccharide binders of this invention.

Our petroleum wax-tree chewing gum may also contain, and be manufactured by using other binder ingredients such as Lycasin[®1], or Hydrogenated Starch Hydrolysate, HSH, corn syrups, and the like. The use of these other binders are known in the art, but when used in our formulations these other binders are used within the definition of the binder system which contains our noncariogenic oligosaccharides. This requires from as little as from 0 and up to 65 weight percent, at most, of the binder formulation being the other binders, such as the Lycasin[®] HSH materials, corn syrups and the like, or mixtures thereof.

The sweeteners that we use can be high-intensity sweeteners or can be low-intensity sweeteners such as the more traditional sugars, sugar alcohols and the like.

The high-intensity sweeteners are represented by, but not limited to, sucralose (trade mark), aspartame, stevioside,

[1] Lycasin[®] is a registered trademark of Roquette-Fréres of France.

acesulfame K, alitame, saccharin and its salts, cyclamic acid and its salts, glycyrrhizin, dihydrochalcones, thaumatin, monellin, and the like. These high-intensity sweeteners are at least 20 times sweeter than sucrose. They may be used alone or in combination one with the other, and are used in combination with sugar alcohol and may be used in combination with other low-intensity sweeteners, such as the sugar sweeteners.

The sugar or sugar alcohol sweeteners, sometimes referred to as low-intensity or bulk sweeteners, may also be used in the formulations of our wax-free gums. These bulk sweeteners may include both sugar and sugarless sweeteners and components. Sugar sweeteners include saccharides such as, but not limited to, sucrose, dextrose, maltose, dry invert sugar, fructose, levulose, galactose, corn syrup solids, and the like. These materials may be used alone or in combination one with the other, or in combination with the high-intensity sweeteners above, or with the sugarless sweeteners below, or both.

Sugar alcohols have sweetening characteris-tics but are devoid of cariogenic properties of commonly known sugars and are more slowly metabolized. Such sugar alcohols include, but are not limited to, sorbitol, mannitol, xylitol, hydrogenated starch hydrolysates, maltitol, and the like. Again these may be used alone or in combination with normal sugar sweeteners or bulking agents and in combination with the high-intensity sweeteners above. Combination of these sugars, sugar alcohols, and high-intensity sweeteners may be used in our chewing gums. These sweeteners, particularly the sugars and sugar alcohols, may also function in the chewing gum in whole or in part as water-soluble bulking agents.

High-intensity sweeteners are normally present within the range of 0.001 to 2 weight percent, preferably within the range of 0.002 to 1 weight percent, and most preferably within the range of 0.005 to 0.75 weight percent of the gum formulation. Bulk sweeteners, either the sugar or sugar alcohol sweeteners, may be present in the gum formulations within the range of 0 to 70 weight percent, preferably from 0.0 to 50 weight percent and most preferably from 5.0 to 40 weight percent.

Our chewing gums may also contain optional ingredients such as synthetic softeners, represented for example by glycerin, with concentrations ranging from about 0 to 15 weight percent, preferably from 1.5 to 10 weight percent, and additional fillers, emulsifiers, colors and antioxidants. In addition, our chewing gums can contain miscellaneous ingredients such as flavor enhancers, pharmaceuticals and food acidulants as well as bulking agents, both sweet bulking agents and non-sweet bulking agents.

Finally, our chewing gums contain flavoring agents, generally in the range of from 0.01 to 10 weight percent, preferably from 0.1 to 7.5 weight percent and most preferably from 0.2 to 6.5 weight percent. These flavor ingredients can include, but are not limited to, essential oils, synthetic flavors or mixtures thereof, including oils derived from plants and fruits, such as citrus oils, fruit essences, peppermint oil, spearmint oil, other mint oils, clove oil, oil of wintergreen, anise, and the like. Artificial or synthetic flavoring agents and components may also be used. Natural and artificial flavoring agents may be combined in any sensorially acceptable fashion.

To better exemplify our petroleum wax-free chewing gum, we present the following gum base formulations. These gum bases are useful in our invention, but our invention is not limited to the use of the exemplified gum bases:

**EXAMPLES 1-6**

| IDENTIFICATION -EXAMPLE #: GENERIC INGREDIENTS | 1 | 2 | 3 | 4 | 5 | 6 |
|---|---|---|---|---|---|---|
| ** NATURAL ELASTOMER ** | | | | | | |
| NATURAL GUM | | | | | | 22.2 |
| ** SYNTHETIC ELASTOMER ** | | | | | | |
| STYRENE-BUTADIENE ELASTOMER | --- | 3.9 | --- | --- | --- | --- |
| BUTYL (ISOPRENE-ISOBUTYLENE) ELASTOMER | 8.1 | 5.3 | 8.9 | 10.0 | 8.3 | 5.7 |
| POLYISOBUTYLENE ELASTOMER | 3.6 | 12.7 | 10.0 | 1.9 | 3.6 | 3.1 |
| POLYVINYL ACETATE | 27.3 | 14.9 | 21.3 | 27.6 | 27.5 | 22.0 |
| ** ELASTOMER PLASTICIZERS | | ** | | | | |
| GLYCEROL ESTERS OF ROSIN | --- | --- | --- | --- | --- | --- |
| GLYCEROL ESTERS OF PART HYD ROSIN | --- | --- | --- | --- | --- | 13.2 |
| METHYL ESTERS OF ROSIN | | | | | | 2.0 |
| TERPENE RESINS | 26.8 | 21.4 | 9.7 | 25.3 | 25.3 | --- |
| ** FILLER ** | | | | | | |
| CALCIUM CARBONATE | 11.4 | 13.7 | 21.5 | 11.3 | 11.3 | 11.3 |
| TALC | --- | 1.4 | --- | --- | --- | --- |
| ** SOFTENER ** | | | | | | |
| HYDROGENATED VEGETABLE OIL | 14.3 | 18.7 | 23.2 | 15.4 | 16.5 | 17.2 |
| GLYCEROL MONOSTEARATE | 4.8 | 5.7 | 5.4 | 4.8 | 4.8 | 3.3 |
| LECITHIN | 3.7 | 2.3 | --- | 3.7 | 2.7 | --- |
| **TOTAL PERCENT** | 100.0 | 100.0 | 100.0 | 100.0 | 100.0 | 100.0 |

The above petroleum wax-free gum bases may then used to formulate the following wax-free chewing gums with binders of our invention.

EXAMPLES - WAX-FREE CHEWING GUMS

| Ex. 1 | Ex. 1 (comparative) |
|---|---|
| Gum Base of Example 1* | 23.00 |
| Sucrose | 60.94 |
| Corn Syrup | 12.00 |
| Indigestible Dextrin (Fibersol) | --- |
| Peppermint Flavor | 1.00 |
| Glycerin | 3.00 |
| Color | 0.06 |
| | 100.00 |

|  | Ex. 2 (inventive) | Ex. 3 (comparative) |
|---|---|---|
| Gum Base of Example 6 | 24.00 | 24.00 |
| Sorbitol | 53.00 | 59.00 |
| Glycerin | 4.00 | 4.00 |
| Mannitol | 6.00 | 6.00 |
| Hydrogenated Starch Hydrolysate Syrup | 6.00 | 6.00 |
| Fructooligosaccharide (NutraFlora) | 6.00 | --- |
| Spearmint Flavor | 0.80 | 0.80 |
| Lecithin | 0.20 | 0.20 |
|  | 100.00 | 100.00 |
| (High-intensity sweetener may be added if desired). | | |

|  | Ex. 4 (inventive) | Ex. 5 (comparative) |
|---|---|---|
| Gum Base of Example 3 | 20.00 | 20.00 |
| Sorbitol | 52.89 | 63.89 |
| Mannitol | 4.00 | 4.00 |
| Glycerin | 5.00 | 5.00 |
| Isomaltulose Oligosaccharide | 11.00 | --- |
| Wintergreen Flavor | 1.31 | 1.31 |
| Encapsulated APM | 0.60 | 0.60 |
| Lecithin | 0.20 | 0.20 |
|  | 100.00 | 100.00 |

|  | Ex. 6 (inventive) | Ex. 7 (comparative) |
|---|---|---|
| Gum Base of Example 4 | 21.00 | 21.00 |
| Xylitol | 57.05 | 67.05 |
| Sorbitol Solution (70%) | 5.00 | 5.00 |
| Glycerin | 5.00 | 5.00 |
| Inulin (Raftilin) | 10.00 | --- |
| Cinnamon Flavor | 1.20 | 1.20 |
| Encapsulated Acesulfame K | 0.50 | 0.50 |
| Lecithin | 0.25 | 0.25 |

(continued)

|  | Ex. 6 (inventive) | Ex. 7 (comparative) |
|---|---|---|
|  | 100.00 | 100.00 |

| | Ex. 8 | Ex. 9 | Ex. 10 | Ex. 11 | Ex. 12 | Ex. 13 | Ex. 14 |
|---|---|---|---|---|---|---|---|
| Gum Base Ex. #/% | 2/22.00 | 5/23.00 | 6/22.00 | 4/24.00 | 2/25.00 | 2/22.00 | 5/23.00 |
| Sorbitol | 33.25 | 22.35 | 27.05 | 25.19 | 26.96 | 28.65 | 25.55 |
| Mannitol | 5.00 | 4.00 | 4.00 | 6.00 | 4.00 | 5.00 | 6.00 |
| Glycerin | 3.00 | 10.00 | 5.00 | 4.00 | 7.00 | 4.00 | 5.00 |
| Fructooligosaccharide (NutraFlora) | 30.00 | — | — | — | — | — | — |
| FOS Syrup | 5.00 | — | — | — | — | — | — |
| Polydextrose | — | 35.00 | — | — | — | — | — |
| Oligofructose (Raftilose) | — | — | 35.00 | — | — | — | — |
| Isomaltulose Oligosaccharides | — | — | — | 35.00 | — | — | — |
| Indigestible Dextrin (Fibersol) | — | — | — | — | 35.00 | — | — |
| Inulin (Raftilin) | — | — | — | — | — | 35.00 | — |
| Guar Gum Hydrolysate | — | — | — | — | — | — | 35.00 |
| HSH Syrup | — | — | 5.00 | 4.00 | — | — | 4.00 |
| Sorbitol Solution (70%) | — | 4.00 | — | — | — | 4.00 | — |
| Flavor type/level | Pepper-mint 1.10 | Spear-mint 0.95 | Cinna-mon 1.20 | Winter-green 1.06 | Sweet Fruit 1.24 | Pepper-mint 1.05 | Pepper-mint 1.05 |
| Sweetenter type/level | Enc./APM 0.50 | Enc./Free APM 0.50 | Enc. Acesul-fame K 0.50 | Enc. APM 0.60 | Enc. APM 0.60 | Sucralose 0.15 | Enc. Sucralose 0.25 (TM) |
| Lecithin | 0.15 | 0.20 | 0.25 | 0.15 | 0.20 | 0.15 | 0.15 |

ENC = encapsulated, referring to sweeteners that are variously encapsulated, as known in the art.
APM = aspartame

| | Ex. 15 | Ex. 16 | Ex. 17 | Ex. 18 | Ex. 19 | Ex. 20 | Ex. 21 |
|---|---|---|---|---|---|---|---|
| Gum Base Ex. #/% | 1/24.00 | 4/25.00 | 6/24.00 | 3/26.00 | 3/25.00 | 1/26.00 | 4/24.00 |
| Sorbitol | — | — | — | — | — | — | — |
| Mannitol | 3.00 | 2.00 | — | — | 3.00 | 2.00 | — |
| Glycerin | 4.00 | 4.00 | 5.00 | 5.00 | 4.00 | 5.00 | 8.00 |
| Fructooligosaccharide (NutraFlora) | 61.00 | — | — | — | — | — | — |
| FOS Syrup | 6.00 | — | 6.00 | 7.00 | — | — | — |
| Polydextrose | — | 62.10 | — | — | — | — | — |
| Oligofructose (Raftilose) | — | — | 63.10 | — | — | — | — |
| Isomaltulose Oligosaccharides | — | — | — | 60.30 | — | — | — |
| Indigestible Dextrin (Fibersol) | — | — | — | — | 61.30 | — | — |
| Inulin (Raftilin) | — | — | — | — | — | 59.93 | — |
| Guar Gum Hydrolysate | — | — | — | — | — | — | 66.40 |
| HSH Syrup | — | 5.00 | — | — | — | 6.00 | — |
| Sorbitol Solution (70%) | — | — | — | — | 5.00 | — | — |
| Flavor type/level | Cinnamon 1.10 | Pepper-mint 1.05 | Spear-mint 0.95 | Sweet Fruit 1.30 | Winter-green 1.20 | Spear-mint 0.80 | Cinna-mon 1.15 |
| Sweetenter type/level | Enc./ Free Acesul-fame K 0.65 | Enc./ Free APM 0.65 | Enc./ Free APM 0.70 | Enc./ Free Alitame 0.10 | Enc./ Free Sucralose 0.30 | Enc./ Free Alitame 0.12 | Enc./ Free Sucralose 0.25 (TM) |
| Lecithin | 0.25 | 0.20 | 0.25 | 0.30 | 0.20 | 0.15 | 0.20 |

Enc./Free - a mixture of encapsulated and nonencapsulated sweetener.
APM = aspartame

The chewing gums containing binders having at least 35 weight percent oligosaccharides would provide superior chew characteristics and improved processing and manufacture relative to those gums not containing the binders of our invention.

### MANUFACTURE AND PROCESSING

The wax-free gum base of the invention constitutes from 10 to 90 weight percent of the chewing gum, more typically from 10 to 75 weight percent of the chewing gum, and most commonly from 20 to 50 weight percent of the chewing gum. The gum base is typically prepared by adding an amount of the elastomer, elastomer plasticizers and filler to a heated sigma blade mixer with a front to rear blade speed ratio of typically about 2:1. The temperature is normally sufficiently high to melt the final gum base. The initial amounts of ingredients are determined by the working capacity of the mixing kettle in order to attain a proper consistency. After the initial ingredients have massed homogeneously, the balance of the elastomer, or even another elastomer, and the selected plasticizer, filler, softeners, etc. are added in a sequential manner until a completely homogeneous molten mass is attained. This can usually be achieved in from about 30 minutes to about four hours, depending on the formulation. The final mass temperature can be between 60°C and 150°C, more preferably between 80°C and 120°C. The completed molten mass is emptied from the mixing kettle into coated or lined pans, extruded or cast into any desirable shape and allowed to cool and solidify.

Although the above method for making base is typical and applies to both chewing and bubble bases, it has been found that there is a preferred method for making the bubble gum bases of this invention.

First, a majority of elastomer and vinyl polymer and filler are added and blended in a heated sigma blade mixer. Softeners and/or emulsifiers may then be added along with a second portion of each of the selected elastomer or elastomers and filler.

Next, the remainder, if any, of the elastomers and filler are added along with the elastomer plasticizer. Finally, the remaining ingredients, such as glycerol monostearate and antioxidants may be added. Colorant may be added at any time during the mixing process and is preferably added at the start. Natural wax, if present, may also be added at any time, but is preferably added after the first elastomer addition.

There are some variations to the above described preferred method which in no way limit the method as described. Those skilled in the art of gum base manufacture may be able to appreciate any minor variations.

In producing petroleum wax-free gum bases high in vinyl polymer, particularly, polyvinyl acetate, and particularly those high in high molecular weight polyvinyl acetate, it is not necessary to improve blending of the ingredients by removing the heat applied to the sigma blade mixer at some point in the process, as is often required with wax-containing gum bases. In the inventive petroleum wax-free gum base process for making the inventive gum base free of petroleum wax, there is reduced need to remove the heat applied, since incompatibility of the vinyl polymer is greatly reduced, since there is no petroleum wax present.

In addition to the water-insoluble gum base, a typical chewing gum composition includes a water soluble bulk portion including sweeteners, including high potency sweeteners and bulking sweeteners, and one or more flavoring agents. The wax-free gum base of the invention can be used with any typical chewing gum composition, including bubble gums or specialty gums.

The water-soluble portion of the chewing gum may also include synthetic softeners, bulk sweeteners such as sugars and sugar alcohols, high-intensity sweeteners, flavoring agents and combinations thereof. Softeners are added to the chewing gum in order to optimize the chewability and mouth feel of the gum. The softeners may include glycerin, lecithin, and combinations thereof. Aqueous sweetener solutions such as those containing sorbitol, hydrogenated starch hydrolysates, corn syrup and combinations thereof, may also be used as binding agents in combination with the oligosaccharide binding agents of petroleum wax-free chewing gums.

Chewing gum is generally manufactured by sequentially adding the various chewing gum ingredients to any commercially available mixer known in the art. After the ingredients have been thoroughly mixed, the gum mass is discharged from the mixer and shaped into the desired form, such as by rolling into sheets and cutting into sticks, extruding into chunks, or casting into pellets. Generally, the ingredients are mixed by first melting the gum base and adding it to the running mixer. The gum base may alternatively be melted in the mixer. Color and emulsifiers can be added at this time.

A softener such as glycerin can be added next along with the binders of our invention. The binder components may be added separately, or pre-blended and added together. Further parts of the bulk portion, including sweeteners, may then be added to the mixer. Flavoring agents are typically added with the final part of the bulk portion. The entire mixing process typically takes from five to fifteen minutes, although longer mixing times are sometimes required. Those skilled in the art will recognize that variations of this mixing procedure, or other mixing procedures, including continuous processes may be followed.

**Claims**

1. A petroleum wax-free chewing gum comprising:

   a petroleum wax-free base, containing from 1 to 40 wt. % fats and oils;

water soluble chewing gum ingredients,

sweetener comprising an admixture of at least one high-intensity sweetener at least 20 times sweeter than sucrose and at least one bulk sweetener selected from the group consisting of sorbitol, mannitol, xylitol, maltitol, lactitol, hydrogenated isomaltulose, and hydrogenated starch hydrolysate; and

from 5 to 90% by weight of the chewing gum, of a noncariogenic oligosaccharide based binder system which includes at least about 35% of at least one noncariogenic oligosaccharide by weight of the binder system selected from the group consisting of indigestible dextrins, polydextroses, oligofructoses, isomaltulose oligosaccharides, and fructooligosaccharides, guar gum hydrolysates, hydrolyzed alginates, hydrolyzed gums, hydrolyzed cellulose or mixtures thereof;

wherein the binder system causes the chewing gum to at least retain the chew characteristics of a chewing gum having wax.

2. A chewing gum as claimed in Claim 1 wherein the noncariogenic oligosaccharides have an average degree of polymerization of at least 3.

3. The chewing gum as claimed in Claim 1 or Claim 2 wherein the noncariogenic oligosaccharides have an average degree of polymerization ranging from 5 to 50.

4. A chewing gum as claimed in any one of Claims 1 to 3, wherein at least one noncariogenic oligosaccharide is poorly utilized by streptococcus mutans.

5. A chewing gum as claimed in any one of Claims 1 to 4, wherein the binder system is comprised of from 40 to 100 wt.% of a noncariogenic oligosaccharide.

6. A chewing gum as claimed in any one of Claims 1 to 3 wherein at least one of the oligosaccharides is a low-calorie oligosaccharide which has an average Degree of Polymerization of at least 3.

7. A chewing gum as claimed in any one of Claims 1 to 6 wherein the water-soluble chewing gum ingredients comprise sweeteners, emulsifiers, and bulking agents, and further wherein the chewing gum comprises oil-soluble flavoring agents, fillers, synthetic softeners and antioxidants.

8. A chewing gum of any one of Claims 1 to 7, wherein the binder system comprises from 10 to 80 wt.% of the gum.

9. A chewing gum as claimed in any one of Claims 1 to 8, comprising elastomers selected from the group consisting of styrene-butadiene copolymers, polyisoprene, polyisobutylene, isobutylene-isoprene copolymer (butyl rubber), natural rubber, chicle, jelutong, balata, guttapercha, lechi caspi, sorva, or mixtures thereof.

10. The chewing gum of Claim 9 wherein the elastomers are selected from the group consisting of styrene-butadiene copolymer having a mole ratio of styrene to butadiene ranging from 2:1 to 1:2 and a weight averlge molecular weight ranging from 10,000 to 200,000, polyisoprene having a weight average molecular weight ranging from 1O,000 to 250,000, polyisobutylene having a weight average molecular weight ranging from 10,000 to 250,000, isobutylene-isoprene copolymer having a mole ratio of isobutylene to isoprene ranging from 20:1 to 1:20 and a weight average molecular weight ranging from 10,000 to 250,000, or mixtures thereof.

11. A chewing gum as claimed in any one of claims 1 to 10 wherein the binder system is present at from 10 to 70 wt. % of the gum, said binder system comprising from 40 to 90 wt. % of noncariogenic oligosaccharides.

12. A chewing gum as claimed in any of claims 1 to 11 comprising from 15 to 75 wt.% petroleum wax-free gum base and from 10 to 80 wt.% of a binder system, wherein the binder system comprises at least 40 wt. % of at least one noncariogenic oligosaccharide; from 0.001 to 50 wt.% sweeteners; 0.01 to 10.0 wt.% flavor ingredients; 0.5 to 25 wt.% emulsifiers, softeners, colorants, whiteners, and bulking agents, wherein the binder system causes the chewing gum to at least retain the chew characteristics of a chewing gum having wax.

13. A chewing gum as claimed in any of claims 1 to 12, wherein the elastomer plasticizer is present in the gum base within the range from 0.5 to 40 wt.%, said plasticizer being selected from at least one of the group conslsting of natural rosln esters, glycerol esters of polymerized rosin, glycerol esters of partially hydrogenated rosin, glycerol esters of partially dimerized rosin, glycerol esters of rosin, pentaerythritol esters of partially hydrogenated rosin, methyl and partially hydrogenated methy] esters of rosin, pentaerythritol esters of rosin, and terpene resins derived from alpha-pinene, beta-pinene, and/or d-limonene.

14. A chewing gum as claimed in any of claims 1 to 13 wherein the gum base fillers are present within the range of from 2.0 to 25.0 wt.% and are selected from at least one of the group consisting of calcium carbonate, ground limestone, silicates, aluminum silicates, silica, alumina, talc, titanium dioxide, mono-, di-, and tri-calcium phosphate, cellulose, and clays.

15. A chewing gum as claimed in any of claims 1 to 14, wherein the gum base contains from 2.0 to 30 wt.% of at least one fat, oil or softener selected from the group consisting of tallow, hydrogenated tallow, hydrogenated vegetable oils, partially hydrogenated vegetable oils, cocoa butter, glycerol monostearate, glycerol triacetate, lecithin, mono-, di-, and tri-glycerides, acidulated monoglycerides, and fatty acids selected from the group consisting of stearic acid, palmitic acid, oleic acid, linoleic acid, lauric acid, myristic acid, arachidic acid, linolenic acid, caproic acid, caprylic acid, butyric acid, decenoic acid, gadoleic acid, or mixtures thereof.

16. A chewing gum as claimed in any of claims 1 to 15, wherein the gum base contains from 0.5 to 25 wt.% of at least one vinyl polymer selected from at least one of the groups consistlng of polyvinylacetate and partially hydrolyzed polyvinylacetate having a weight average molecular weight ranging from 2,000 to 1O0,000, polyvinyl alcohol, polyethylene having a weight average molecular weight ranging from 2,000 to 50,000, and copolymers of vinyl acetate and vinyl laurate having a vinyl laurate content of from 5 to 50 weight percent of the copolymer and a weight average molecular weight ranging from 1,000 to 1O0,000; and said chewing gum containing from 0.1 to 3.5 wt.% of at least one natural wax selected from the group consisting of candelilla wax, carnauba wax, ozoberite, oricury, beeswax, rice bran wax, Japan wax and jojoba wax.

17. The gum as claimed in any one of Claims 1 to 16 wherein the high intensity sweeteners are selected from the group consisting of sucralose, aspartame, stevioside, acesulfame K, alitame, saccharin and its salts, cyclamic acid and its salts, glycyrrhizin, dihydrochalcones, thaumatin, monellin, or mixtures thereof.

18. A chewing gum as claimed in any of claims 1 to 19, wherein the high-intensity sweetener is present in the gum at from 0.01 to 2.0 wt.%.

19. A chewing gum as claimed in any of Claims 1 to 18 wherein the binder system comprises at least 40 weight percent of indigestible dextrin.

20. A chewing gum as claimed in any of Claims 1 to 18, wherein the binder system comprises at least 40 weight percent of polydextrose.

21. A chewing gum as claimed in any of Claims 1 to 18, wherein the binder system comprises at least 40 wt.% of oligofructose.

22. A chewing gum as claimed in any of Claims 1 to 18 wherein the binder system comprises at least 40 wt.% of isomaltulose oligosaccharides.

23. A chewing gum as claimed in any of Claims 1 to 18 wherein the binder system comprises at least 40 wt.% of fructooligosaccharides.

24. A chewing gum as claimed in any of Claims 1 to 18 wherein the binder system comprises at least 40 wt.% of at least a dual combination of oligosaccharides selected from the group consisting of indigestible dextrins, polydextroses, oligofructoses, isomaltulose oligosaccharides, and fructooligosaccharides.

25. A chewing gum as claimed in any one of claims 1 to 24, comprising:

| Ingredients | | Weight % |
|---|---|---|
| a) | wax-free gum base | from 20 to 50 |

(continued)

| Ingredients | | Weight % |
|---|---|---|
| b) | a binder system comprising at least 35 wt.% of the binder system of noncariogenic oligosaccharides | from 10 to 50 |
| c) | sweeteners | from 0.005 to 50 |
| d) | flavors, | from 0.5 to 50 |
| and | | |
| e) | optional ingredients, selected from the group consisting of: | from 0.1 to 40 |
| | synthetic softeners | from o.l to 20 |
| | fillers | from 0.0 to 30 |
| | emulsifiers | from 0.0 to 2 |
| | colorants & dyes | from 0.0 to 1.0 |
| | antioxidants | from 0.0 to 1.0 |
| | non-sweet bulking agents | from 0.0 to 39 |
| | flavor enhancers | from 0.0 to 2.0 |
| | food acidulants | from 0.0 to 3.0 |
| | medicinals/pharmaceuticals | from 0.0 to 2.5 |
| f) | wherein the binder system causes the chewing gum to at least retain the chew characteristics of a chewing gum having wax. | |

26. A chewing gum as claimed in any one of Claims 1 to 25 wherein the gum base comprises: from 10 to 90 wt.% elastomers, from 0 to 50 wt.% elastomer plasticizer, from 1 to 40 wt.% of fats and oils, from 0.5 to 40 wt.% fillers/texturizers, from 0.5 to 40 wt.% vinyl polymers, from 0.5 to 5.0 wt.% emulsifiers, colorants, synthetic softeners, whiteners, and antioxidants and from 0 to 5.0 wt.% natural waxes.

27. A gum as claimed in any one of claims 1 to 25, wherein the gum base comprises: from 15-75 wt.% elastomers, from 0 to 40 wt.% elastomer plasticizer, from 5 to 35 wt.% fats and oils, from 1.0 to 3.0 wt.% fillers/texturizers, from 1.0 to 30 wt.% vinyl polymers, from 0.5 to 5.0 wt.% emulsifiers, colorants, synthetic softeners, whiteners, and antioxidants and from 0.0 to 3.5 wt.% natural waxes.

28. The chewing gum of Claim 13 wherein the gum base comprises: from 15 to 65 wt.% elastomers; from 0 to 40 wt.% elastomer plasticizer; from 1.0 to 30.0 wt.% fats and oils; from 1.0 to 30.0 wt.% fillers/texturizers; from 2.0 to 30.0 wt.% vinyl polymers; from 0.1 to 5.0 wt.% emulsifiers, colorants, whiteners, antioxidants, and from o to 3.5 wt.% natural waxes.

29. A gum as claimed in any one of Claims 1 to 24, wherein the gum base comprises:

| Ingredients | | Weight % |
|---|---|---|
| a) | elastomers | from 20 to 50 |
| b) | elastomer plasticizer | from 10 to 50 |
| c) | fats and oils | from 5 to 30 |
| d) | vinyl polymers | from 5 to 30 |
| e) | fillers | from 5 to 25 |
| f) | emulsifiers, antioxidants, dyes colors, whiteners, softeners | from 0.1 to 10 |

(continued)

| Inqredients | | Weight % |
|---|---|---|
| g) | natural waxes | from 0.0 to 3.5 |

30. A gum as claimed in any one of claims 1 to 8, wherein:

a) the wax-free gum base comprises synthetic elastomers selected from the group consisting of:

1) styrene-butadiene copolymers having a styrene to butadiene mole ratio from 3:1 to 1:3 and a weight average molecular weight ranging from 10,000 and 80,000;
2) polyisoprene having a weight average molecular weight from 10,000 to 85,000;
3) polyisobutylene having a weight average molecular weight from 10,000 to 90,000;
4) isobutylene-isoprene copolymer having a weight average molecular weight of from 10,000 to 90,000; and
5) mixtures thereof; and

b) the wax-free gum base further comprises vinyl polymers selected from polyvinyl acetate having a weight average molecular weight from 10,000 to 100,000, vinyl acetate-vinyl laurate copolymers having a vinyl laurate wt.% ranging from 5-50 wt.% and a weight average molecular weight ranging from 10,000 to 75,000, or mixtures thereof; and
c) the wax-free gum base further comprises elastomer plasticizers selected from the group glycerol esters of hydrogenated rosin; glycerol esters of partially hydrogenated rosin; glycerol esters of polymerized rosin; glycerol esters of rosin; glycerol esters of dimerized or partially dimerized esters; pentaerythritol esters of rosin; pentaerythritol esters of partially hydrogenated rosin; pentaerythritol esters of hydrogenated rosin; methyl esters of rosin; partially hydrogenated methyl esters of rosin; terpene resins derived from $\alpha$-pinene, $\beta$-pinene and/or d-limonene; or any admixture thereof; and
d) the wax-free gum base further comprises fillers selected from the group magnesium oxide, hydroxide, carbonate, or mixtures thereof; calcium oxide, hydroxide, carbonate, or mixtures thereof; limestone; magnesium silicate; aluminum silicate; calcium silicate; clays; alumina; silica; talc; titanium dioxide; mono-, di-, and/or tricalcium phosphate; cellulosics; and any combination thereof; and
e) the wax-free gum base further comprises fats, oils, and softeners selected from the group: tallow; hydrogenated tallow; vegetable oils; partially hydrogenated vegetable oils; hydrogenated vegetable oils; cocoa butter; glycerol monostearate; glycerol triacetate; lecithin; mono-, di-, and/or tri-glycerides; acetylated monoglycerides; fatty acids and/or their methyl/ethyl esters; or any admixture thereof; and
f) the wax-free chewing gum further comprises sweeteners selected from the group: sucralose; aspartame; stevioside; acesulfame K; alitame; saccharin, and its salts; cyclamic acid, and its salts; glycyrrhizin; dihydrochalcones; thaumatin; monellin; sucrose; glucose; fructose; maltose; dextrin; invert sugar; galactose; corn syrup solids; sorbitol; mannitol; xylitol; hydrogenated starch hydrolysates; maltitol; or any admixture thereof.

31. A chewing gum as claimed in Claims 30 further comprising from 0.1 to 5.0 wt.% natural waxes selected from the group: candelilla wax; carnauba wax; ozoberite; oricury; beeswax; rice bran wax; Japan wax; jojoba wax; or mixtures thereof.

32. A method of manufacturing a petroleum wax-free chewing gum which comprises sequentially blending petroleum wax-free gum base ingredients including

a) 1 to 40% fats and oils into a molten homogeneous mass; and then sequentially admixing the molten portions with
b) water soluble chewing gum ingredients,
c) sweetener comprising an admixture of at least one high-intensity sweetener at least 20 times sweeter than sucrose and at least one bulk sweetener selected from the group consisting of sorbitol, mannitol, xylitol, maltitol, lactitol, hydrogenated isomaltulose, and hydrogenated starch hydrolysate; and
d) from 5 to 90% by weight of the chewing gum, of a noncariogenic oligosaccharide based binder system which includes at least about 35% of at least one noncariogenic oligosaccharide by weight of the binder system selected from the group consisting of indigestible dextrins, polydextroses, oligofructoses, isomaltulose oligosaccharides, and fructooligosaccharides, guar gum hydrolysates, hydrolyzed alginates, hydrolyzed gums, hydrolyzed cellulose or mixtures thereof; blending for a sufficient time to obtain a molten chewing gum and then discharging the molten chewing gum, extruding or shaping and cooling same, thereby forming a shaped petroleum wax-free chewing gum containing noncariogenic oligosaccharides based binder system which binder system causes the chewing gum to at least retain the chew characteristics of a chewing gum having wax.

33. A method of manufacturing a chewing gum as claimed in claim 32, which comprises blending at a temperature sufficient to maintain a molten state, in any order, the following ingredients:

| from 10 to 90 wt% | elastomers |
| from 0 to 50 wt% | elastomer plasticizers |
| from 1 to 40 wt% | fats, oils and softeners |
| from 0.5 to 40 wt% | fillers/texturizers |
| from 0.5 to 40 wt% | vinyl polymers |
| from 0.0 to 5 wt% | natural waxes |

in a mixer designed and equipped to manufacture chewing gum base; and then mixing said ingredients for a sufficient time to obtain a molten homogeneous mass then cooling and casting to obtain a shaped gum base; and then mixing the gum base at a temperature sufficient to at least soften the gum base, and then mixing with, in any order, water soluble chewing gum ingredients including a noncariogenic oligosaccharide based binder system, thereby obtaining a molten, dough-like petroleum wax-free chewing gum mixture, and then adding thereto and mixing therewith selected flavouring agents to obtain a flavoured molten dough-like chewing gum; and then discharging the flavoured gum into shaping devices, cooling, and recovering said petroleum wax-free chewing gum; wherein the binder system causes the chewing gum to at least retain the chew characteristics of a chewing gum having wax.

34. A method as claimed in claim 32 or claim 33 wherein the water-soluble chewing gum ingredients comprise from 0.001 to 70 wt% Sweeteners from 5.0 to 90 wt% Binder system and further wherein the chewing gum contains flavouring agents from 0.01 to 10 wt.%.

35. A method as claimed in any one of Claims 32 to 34 wherein componants a), b), c), and d) and additional componants of the gum are in accordance with any one of claims 2 to 31.

## Patentansprüche

1. Ein Petroleumwachs-freies Kaugummi, umfassend:

    eine Petroleumwachs-freie Basis, die 1 bis 40 Gew.-% Fette und Öle enthält;

    wasserlösliche Kaugummizutaten,

    Süßstoffe, umfassend eine Mischung aus mindestens einem hochintensiven Süßstoff, der mindestens 20 Mal süßer ist als Saccharose und mindestens einem Massesüßstoff, ausgewählt aus der Gruppe, bestehend aus Sorbit, Mannit, Xylit, Maltit, Lactit, hydrierter Isomaltulose und hydriertem Stärkehydrolysat; und

    5 bis 90 Gew.-% des Kaugummis aus einem nicht kariesauslosenden, auf einem Oligosaccharid basierenden, Bindemittelsystem, das mindestens ungefähr 35% von mindestens einem nicht kariesauslösenden Oligosaccharid pro Gewicht des Bindemittelsystems enthält, ausgewählt aus der Gruppe, bestehend aus unverdaulichen Dextrinen, Polydextrosen, Oligofructosen, Isomaltulose-Oligosacchariden und Fructooligosacchariden, Guargummihydrolysaten, hydrolysierten Alginaten, hydrolysierten Gummis, hydrolysierter Cellulose oder Mischungen davon;
    wobei das Bindemittelsystem das Kaugummi veranlaßt, mindestens die Kaueigenschaffen eines Kaugummis, das Wachs enthält, zu erhalten.

2. Kaugummi nach Anspruch 1, wobei die nicht kariesauslösenden Oligosaccharide einen durchschnittlichen Polymerisationsgrad von mindestens 3 aufweisen.

3. Kaugummi nach Anspruch 1 oder Anspruch 2, wobei die nicht kariesauslösenden Oligosaccharide einen durchschnittlichen Polymerisationsgrad von 5 bis 50 aufweisen.

4. Kaugummi nach einem oder mehreren der Ansprüche 1 bis 3, wobei mindestens ein nicht kariesauslösendes Oligosaccharid durch Streptococcus mutans schlecht verwertet wird.

5. Kaugummi nach einem oder mehreren der Ansprüche 1 bis 4, wobei das Bindemittelsystem aus 40 bis 100 Gew.-% eines nicht kariesauslösenden Oligosaccharids besteht.

6. Kaugummi nach einem oder mehreren der Ansprüche 1 bis 3, wobei mindestens eines der Oligosaccharide ein Oligosaccharid mit geringem Kaloriengehalt ist, das einen durchschnittlichen Polymerisationsgrad von mindestens 3 aufweist.

7. Kaugummi nach einem oder mehreren der Ansprüche 1 bis 6, wobei die wasserlöslichen Kaugummizutaten Süßstoffe, Emulgatoren und massebildende Mittel umfassen und worin weiterhin das Kaugummi öllösliche Geschmacksstoffe, Füllstoffe, synthetische Erweichungsmittel und Antioxidantien umfaßt.

8. Kaugummi nach einem oder mehreren der Ansprüche 1 bis 7, wobei das Bindemittelsystem 10 bis 80 Gew.-% des Gummis umfaßt.

9. Kaugummi nach einem oder mehreren der Ansprüche 1 bis 8, umfassend Elastomere, ausgewählt aus der Gruppe, bestehend aus Styrol-Butadien-Copolymeren, Polyisopren, Polyisobutylen, Isobutylen-Isopren-Copolymer (Butylgummi), natürliches Gummi, Chicle, Jelutong, Balata, Guttapercha, Lechi caspi, Sorva oder Mischungen davon.

10. Kaugummi nach Anspruch 9, wobei die Elastomere aus der Gruppe ausgewählt sind, bestehend aus einem Styrol-Butadien-Copolymer mit einem Molverhältnis von Styrol zu Butadien im Bereich von 2:1 bis 1:2 und einem durchschnittlichen gewichtsbezogenen Molekulargewicht im Bereich von 10000 bis 200000, Polyisopren, das ein durchschnittliches gewichtsbezogenes Molekulargewicht im Bereich von 10000 bis 250000 aufweist, Polyisobutylen, das ein durchschnittliches gewichtsbezogenes Molekulargewicht im Bereich von 10000 bis 250000 aufweist, das Isobutylen-Isopren-Copolymer, das ein Molverhältnis von Isobutylen zu Isopren im Bereich von 20:1 bis 1:20 und ein durchschnittliches gewichtsbezogenes Molekulargewicht im Bereich von 10000 bis 250000 aufweist oder Mischungen davon.

11. Kaugummi nach einem oder mehreren der Ansprüche 1 bis 10, wobei das Bindemittelsystem mit 10 bis 70 Gew.-% des Gummis vorliegt, wobei das Bindemittelsystem 40 bis 90 Gew.-% der nicht kariesauslösenden Oligosaccharide umfaßt.

12. Kaugummi nach einem oder mehreren der Ansprüche 1 bis 11, umfassend 15 bis 75 Gew.-% einer Petroleumwachs-freien Gummibasis und 10 bis 80 Gew.-% eines Bindemittelsystems, wobei das Bindemittelsystem mindestens 40 Gew.-% von mindestens einem nicht kariesauslösenden Oligosaccharid umfaßt; 0,001 bis 50 Gew.-% Süßstoffe; 0,01 bis 10 Gew.-% Geschmacksbestandteile; 0,5 bis 25 Gew.-% Emulgatoren, Erweichungsmitteln, Färbemittel, Aufheller und massebildende Mittel, wobei das Bindemittelsystem dem Kaugummi die Fähigkeit verleiht, mindestens die Kaueigenschaften eines Kaugummis, das Wachs aufweist, zu erhalten.

13. Kaugummi nach einem oder mehreren der Ansprüche 1 bis 12, wobei der Elastomer-Erweichungsmittel in der Gummibasis im Bereich von 0,5 bis 40 Gew.-% vorliegt, wobei der Erweichungsmittel ausgewählt ist aus mindestens einem aus der Gruppe, bestehend aus natürlichen Harzestern, Glycerinestern von polymerisiertem Harz, Glycerinestern von teilweise hydriertem Harz, Glycerinestern von teilweise dimerisiertem Harz, Glycerinestern von Harz, Pentaerythritolestern von teilsweise hydriertem Harz, Methyl und teilweise hydrierten Methylestern von Harz, Pentaerythritolestern von Harz und Terpenharzen, abgeleitet von alpha-Pinen, beta-Pinen und/oder d-Limonen.

14. Kaugummi nach einem oder mehreren der Ansprüche 1 bis 13, wobei die Gummibasisfüllstoffe im Bereich von 2 bis 25 Gew.-% vorliegen und ausgewählt sind aus mindestens einem aus der Gruppe, bestehend aus Calciumcarbonat, gemahlenem Kalkstein, Silicaten, Aluminiumsilicaten, Siliciumdioxid, Aluminiumoxid, Talk, Titandioxid, Mono-, Di- und Tricalciumphosphat, Cellulose und Tonarten.

15. Kaugummi nach einem oder mehreren der Ansprüche 1 bis 14, wobei die Gummibasis 2 bis 30 Gew.-% von mindestens einem Fett, Öl oder Erweichungsmittel enthält, ausgewählt aus der Gruppe, bestehend aus Talg, hydriertem Tag, hydrierten pflanzlichen Ölen, teilweise hydrierten pflanzlichen Ölen, Kakaobutter, Glycerinmonostearat, Glycerintriacetat, Lecithin, Mono-, Di- und Triglyceriden, angesäuerten Monoglyceriden und Fettsäuren, ausgewählt aus der Gruppe, bestehend aus Stearinsäure, Palmitinsäure, Ölsäure, Linoleinsäure, Laurinsäure Myristinsäure, Arachinsäure, Linolensäure, Capronsäure, Caprylsäure, Buttersäure, Decenoinsäure, Gadoleinsäure oder Mischungen davon.

**16.** Kaugummi nach einem oder mehreren der Ansprüche 1 bis 15, wobei die Gummibasis 0,5 bis 25 Gew.-% von mindestens einem Vinylpolymer enthält, ausgewählt aus mindestens einem aus der Gruppe, bestehend aus Polyvinylacetat und teilweise hydrolysiertem Polyvinylacetat mit einem gewichtsbezogenen durchschnittlichen Molekulargewicht von 2000 bis 100000, Polyvinylalkohol, Polyethylen mit einem gewichtsbezogenen durchschnittlichen Molekulargewicht von 2000 bis 50000 und Copolymeren von Vinylacetat und Vinyllaurat mit einem Vinyllauratgehalt von 5 bis 50 Gew.-% des Copolymers und einem gewichtsbezogenen durchschnittlichen Molekulargewicht von 1000 bis 100000; und wobei das Kaugummi 0,1 bis 3,5 Gew.-% von mindestens einem natürlichen Wachs enthält, ausgewählt aus der Gruppe, bestehend aus Candelilla-Wachs, Carnauba-Wachs, Ozoberit, Oricur, Bienenwachs, Reiswachs, Japanwachs und Jojobawachs.

**17.** Kaugummi nach einem oder mehreren der Ansprüche 1 bis 16, wobei die hochintensiven Süßstoffe ausgewählt sind aus der Gruppe, bestehend aus Sucralose, Aspartam, Steviosid, Acesulfam K, Alitam, Saccharin und seinen Salzen, Cyclaminsäure und ihren Salzen, Glycyrrhizin, Dihydrochalconen, Thaumatin, Monellin oder Mischungen davon.

**18.** Kaugummi nach einem oder mehreren der Ansprüche 1 bis 19, wobei der hochintensive Süßstoff in dem Kaugummi mit 0,01 bis 2 Gew.-% vorliegt.

**19.** Kaugummi nach einem oder mehreren der Ansprüche 1 bis 18, wobei das Bindemittelsystem mindestens 40 Gew.-% eines unverdaulichen Dextrins umfaßt.

**20.** Kaugummi nach einem oder mehreren der Ansprüche 1 bis 18, wobei das Bindemittelsystem mindestens 40 Gew.-% Polydextrose umfaßt.

**21.** Kaugummi nach einem oder mehreren der Ansprüche 1 bis 18, wobei das Bindemittelsystem mindestens 40 Gew.-% Oligofructose umfaßt.

**22.** Kaugummi nach einem oder mehreren der Ansprüche 1 bis 18, wobei das Bindemittelsystem mindestens 40 Gew.-% Isomaltulose-Oligosaccharide umfaßt.

**23.** Kaugummi nach einem oder mehreren der Ansprüche 1 bis 18, wobei das Bindemittelsystem mindestens 40 Gew.-% Fructooligosaccharide umfaßt.

**24.** Kaugummi nach einem oder mehreren der Ansprüche 1 bis 18, wobei das Bindemittelsystem mindestens 40 Gew.-% mindestens einer Doppelkombination von Oligosacchariden umfaßt, ausgewählt aus der Gruppe, bestehend aus unverdaulichen Dextrinen, Polydextrosen, Oligofructosen, Isomaltulose-Oligosacchariden und Fructooligosacchariden.

**25.** Kaugummi nach einem oder mehreren der Ansprüche 1 bis 24, umfassend:

| Bestandteile | | Gew.-% |
|---|---|---|
| a) | wachsfreie Gummibasis | von 20 bis 50 |
| b) | ein Bindemittelsystem, umfassend mindestens 35 Gew.-% des Bindemittelsystems nicht kariesauslösender Oligosaccharide | von 10 bis 50 |
| c) | Süßstoffe | von 0,005 bis 50 |
| d) | Geschmacksstoffe | von 0,5 bis 50 |
| und | | |

(continued)

| Bestandteile | | Gew.-% |
|---|---|---|
| e) | optionale Bestandteile, ausgewählt aus der Gruppe, bestehend aus: | von 0,1 bis 40 |
| | synthetische Erweichungsmittel | von 0,1 bis 20 |
| | Füllstoffe | von 0,0 bis 30 |
| | Emulgatoren | von 0,0 bis 2 |
| | Färbemittel und Farbstoffe | von 0,0 bis 1,0 |
| | Antioxidantien | von 0,0 bis 1,0 |
| | nichtsüße massebildende Mittel | von 0,0 bis 39 |
| | Geschmacksverstärker | von 0,0 bis 2 |
| | Nahrungsmittelansäuerungsmittel | von 0,0 bis 3,0 |
| | medizinische Stoffe/Pharmazeutika | von 0,0 bis 2,5 |
| f) | wobei das Bindemittelsystem das Kaugummit dazu veranlaßt, mindestens die Kaueigenschaffen eines Kaugummis, das Wachs enthält, zu erhalten. | |

26. Kaugummi nach einem oder mehreren der Ansprüche 1 bis 25, wobei die Gummibasis folgendes umfaßt: 10 bis 90 Gew.-% Elastomere, 0 bis 50 Gew.-% Elastomer-Erweichungsmittel, 1 bis 40 Gew.-% Fette und Öle, 0,5 bis 40 Gew.-% Füllstoffe/ Strukturmittel, 0,5 bis 40 Gew.-% Vinylpolymere, 0,5 bis 5 Gew.-% Emulgatoren, Färbemittel, synthetische Erweichungsmittel, Aufheller und Antioxidantien und 0 bis 5 Gew.-% natürliche Wachse.

27. Kaugummi nach einem oder mehreren der Ansprüche 1 bis 25, wobei die Gummibasis folgendes umfaßt: 15 bis 75 Gew.-% Elastomere, 0 bis 40 Gew.-% Elastomer-Erweichungsmittel, 5 bis 35 Gew.-% Fette und Öle, 1 bis 3 Gew.-% Füllstoffe/Strukturmittel, 1 bis 30 Gew.-% Vinylpolymere, 0,5 bis 5 Gew.-% Emulgatoren, Färbemittel, synthetische Erweichungsmittel, Aufheller und Antioxidantien und 0 bis 3,5 Gew.-% natürliche Wachse.

28. Kaugummi nach Anspruch 13, wobei die Gummibasis folgendes umfaßt: 15 bis 65 Gew.-% Elastomere, 0 bis 40 Gew.-% Elastomer-Erweichungsmittel, 1 bis 30 Gew.-% Fette und Öle, 1 bis 30 Gew.-% Füllstoffe/ Strukturmittel, 2 bis 30 Gew.-% Vinylpolymere, 0,1 bis 5 Gew.-% Emulgatoren, Farbstoffe, Aufheller und Antioxidantien und 0 bis 3,5 Gew.-% natürliche Wachse.

29. Gummi nach einem oder mehreren der Ansprüche 1 bis 24, wobei die Gummibasis folgendes umfaßt:

| Bestandteile | | Gew.-% |
|---|---|---|
| a) | Elastomere | von 20 bis 50 |
| b) | Elastomer-Erweichungsmittel | von 10 bis 50 |
| c) | Fette und Öle | von 5 bis 30 |
| d) | Vinylpolymere | von 5 bis 30 |
| e) | Füllstoffe | von 5 bis 25 |
| f) | Emulgatoren, Antioxidantien, Farbstoffe, Aufheller, Erweichungsmittel | von 0,1 bis 10 |
| g) | natürliche Wachse | von 0,0 bis 3,5 |

30. Gummi nach einem oder mehreren der Ansprüche 1 bis 8, wobei:

a) die wachsfreie Gummibasis synthetische Elastomere umfaßt, ausgewählt aus der Gruppe, bestehend aus:

1) Styrol-Butadien-Copolymeren mit einem Styrol zu Butadien Molverhältnis von 3:1 bis 1:3 und einem gewichtsbezogenen durchschnittlichen Molekulargewicht von 10000 bis 80000;

2) Polyisopren mit einem gewichtsbezogenen durchschnittlichen Molekulargewicht von 10000 bis 85000;

3) Polyisobutylen mit einem gewichtsbezogenen durchschnittlichen Molekulargewicht von 10000 bis 90000;

4) Isobutylen-Isopren-Copolymer mit einem gewichtsbezogenen durchschnittlichen Molekulargewicht von 10000 bis 90000; und

5) Mischungen davon; und

b) die wachsfreie Gummibasis, weiterhin Vinylpolymere umfaßt, ausgewählt aus Polyvinylacetat mit einem gewichtsbezogenen durchschnittlichen Molekulargewicht von 10000 bis 100000, Vinylacetat-Vinyllaurat-Copolymere mit einer Vinyllaurat-Gew.-%-Zahl von 5 bis 50 Gew.-% und einem gewichtsbezogenen durchschnittlichen Molekuuargewicht von 10000 bis 75000 oder Mischungen davon; und

c) die wachsfreie Gummibasis außerdem Elastomer-Erweichungsmittel umfaßt, ausgewählt aus der Gruppe, bestehend aus Glycerinestern von hydriertem Harz, Glycerinestern von teilweise hydriertem Harz, Glycerinestern von polymerisiertem Harz, Glycerinestern von Harz, Glycerinestern von dimerisierten oder teilweise dimerisierten Estern, Pentaerythritolestern von Harz, Pentaerythritolestern von teilweise hydriertem Harz, Pentaerythritolestern von hydriertem Harz, Methylestern von Harz, teilweise hydrierten Methylestern von Harz, Terpenharzen, abgeleitet von $\alpha$-Pinen, $\beta$-Pinen und/oder d-Limonen oder jeder Mischung davon; und

d) die wachsfreie Gummibasis weiterhin Füllstoffe umfaßt, ausgewählt aus der Gruppe, bestehend aus Magnesiumoxid, Hydroxid, Carbonat oder Mischungen davon; Calciumoxid, Hydroxid, Carbonat oder Mischungen davon; Kalkstein; Magnesiumsilicat; Aluminiumsilicat; Calciumsilicat; Tonen; Aluminiumoxid; Silciumdioxid; Talk; Titandioxid; Mono-, Di- und/oder Tricalciumphosphat; Cellulose-Stoffen und jeder Kombination davon; und

e) die wachsfreie Gummibasis weiterhin Fette Öle und Erweichungsmittel umfaßt, ausgewählt aus der Gruppe: Talg; hydriertem Talg; pflanzliche Öle; teilweise hydrierte pflanzliche Öle; hydrierte pflanzliche Öle; Kakaobutter; Glycerinmonosterat; Glycerintriacetat; Lecithin; Mono-, Di- und/oder Triglyceride; acetylierte Monoglyceride; Fettsäuren und/oder ihre Methyl-/Ethylester oder jede Mischung davon; und

f) das wachsfreie Kaugummi weiterhin Süßstoffe umfaßt, ausgewählt aus der Gruppe: Sucralose; Aspartam; Steviosid; Acesulfam K; Alitam; Saccharin und seinen Salzen; Cyclaminsäure und ihren Salzen; Glycyrrhizin; Dihydrochalconen; Thaumatin; Monellin; Saccharose; Glucose; Fructose; Maltose; Dextrin; Invertzucker; Galactose; Kornsirupfeststoffe; Sorbit; Mannit; Xylit; hydrierte Stärkehydroylsate; Maltit oder Mischungen davon.

31. Kaugummi nach Anspruch 30, das außerdem 0,1 bis 5 Gew.-% natürliche Wachse enthält, ausgewählt aus der Gruppe: Candelilla-wachs, Carnauba-Wachs, Ozoberit, Oricur, Bienenwachs, Reiswachs, Japanwachs, Jojobawachs oder Mischungen davon.

32. Verfahren zur Herstellung eines Petroleumwachs-freien Kaugummis, das die aufeinanderfolgende Vermischung von Petroleumwachs-freien Gummibasisbestandteilen umfaßt, einschließlich

a) 1 bis 40% Fette und Öle in eine geschmolzene, homogene Masse; und dann das schrittweise Vermischen der geschmolzenen Bestandteile mit

b) wasserlöslichen Kaugummibestandteilen,

c) Süßstoffen, umfassend eine Mischung aus mindestens einem hochintensiven Süßstoff, der mindestens 20 Mal süßer ist als Saccharose und mindestens einem Massesüßstoff, ausgewählt aus der Gruppe, bestehend aus Sorbit, Mannit, Xylit, Maltit, Lactit, hydrierter Isomaltulose und hydriertem Stärkehydrolysat; und

d) 5 bis 90 Gew.-% des Kaugummis, des nicht kariesauslösenden, auf Oligosaccharid basierendem, Bindemittelsystems, das mindestens ungefähr 35 Gew.-% von mindestens einem, nicht kariesauslösenden Oligosaccharid pro Gewicht des Bindemittelsystems enthält, ausgewählt aus der Gruppe, bestehend aus unverdaulichen Dextrinen, Polydextrosen, Oligofructosen, Isomaltulose-Oligosacchariden und Fructooligosacchariden, Guargummihydrolysaten, hydrolysierten Alginaten, hydrolysierten Gummis, hydrolysierter Cellulose oder Mischungen davon;

Mischen über eine ausreichende Zeitspanne, um ein geschmolzenes Kaugummi zu erhalten und dann Freisetzung des geschmolzenen Kaugummis, Extrusion oder Formen und Abkühlung desselben, wodurch ein geformtes, Petroleumwachs-freies Kaugummi gebildet wird, das ein auf nicht kariesauslösenden Oligosacchariden basierendes Bindemittelsystem enthält, wobei das Bindemittelsystem das Kaugummi veranlaßt, mindestens die Kaueigenschaften eines Kaugummis, das Wachs enthält, zu erhalten.

33. Verfahren zur Herstellung eines Kaugummis nach Anspruch 32, das das Vermischen der folgenden Bestandteile bei ausreichender Temperatur, um einen geschmolzenen Zustand aufrechtzuerhalten, in jeder Reihenfolge umfaßt:

| | |
|---|---|
| 10 bis 90 Gew.-% | Elastomere |
| 0 bis 50 Gew.-% | Elastomer-Weichmacher |
| 1 bis 40 Gew.-% | Fette, Öle und Erweichungsmittel |
| 0,5 bis 40 Gew.-% | Füllstoffe/Strukturmittel |
| 0,5 bis 40 Gew.-% | Vinylpolymere |
| 0 bis 5 Gew.-% | natürliche Wachse |

in einer Mischvorrichtung, die so angeordnet und ausgerüstet ist, daß eine Kaugummibasis hergestellt wird; daraufhin Vermischen der Zutaten über eine ausreichende Zeitspanne, um eine geschmolzene, homogene Masse zu erhalten, die dann gekühlt und geformt wird, um eine geformte Gummibasis zu erhalten; daraufhin Vermischen der Gummibasis bei einer ausreichenden Temperatur, um die Gummibasis mindestens zu erweichen, und daraufhin Vermischen mit wasserlöslichen Kaugummibestandteileien, einschließlich einem auf nicht kariesauslösenden Oligosacchariden basierenden Bindemittelsystem in jeder Reihenfolge, um dadurch eine geschmolzene, teigähnliche, Petroleumwachs-freie Kaugummimischung zu erhalten, daraufhin Zugabe und Vermischen von ausgewählten Geschmacksmitteln, um ein geschmackhaltiges, geschmolzenes, teigähnliches Kaugummi zu erhalten, daraufhin Freisetzung des mit einem Geschmack versehenen Gummis in Formvorrichtungen, Abkühlen und Gewinnung des Petroleumwachsfreien Kaugummis; wobei das Bindemittelsystem das Kaugummi veranlaßt, mindestens die Kaueigenschaften eines Kaugummis, das Wachs enthält, zu erhalten.

34. Verfahren nach Anspruch 32 oder 33, wobei die wasserlöslichen Kaugummibestandteile

0,001 bis 70 Gew.-% Süßstoffe und 5 bis 90 Gew.-% des Bindemittelsystems umfassen und
wobei das Kaugummi weiterhin Geschmacksmittel mit 0,01 bis 10 Gew.-% enthält.

35. Verfahren nach einem oder mehreren der Ansprüche 32 bis 34, wobei sich die Bestandteile a), b), c) und d) und zusätzliche Bestandteile des Gummis in Übereinstimmung mit einem oder mehreren der Ansprüche 2 bis 31 befinden.

## Revendications

1. Gomme à mâcher dépourvue de cire de pétrole, comprenant :

une base dépourvue de cire de pétrole, contenant de 1 à 40 % en poids de graisses et d'huiles ;
des ingrédients de gomme à mâcher solubles dans l'eau ;
un édulcorant comprenant un mélange d'au moins un édulcorant d'intensité élevée, au moins 20 fois plus sucrant que le saccharose, et d'au moins un édulcorant de charge choisi dans l'ensemble constitué par le sorbitol, le mannitol, le xylitol, le maltitol, le lactitol, l'isomaltulose hydrogéné et un hydrolysat hydrogéné d'amidon ; et
de 5 à 90 % en poids, par rapport à la gomme à mâcher, d'un système de liants à base d'oligosaccharides non cariogènes, qui comprend au moins environ 35 % en poids, par rapport au système de liants, d'au moins un oligosaccharide non cariogène choisi dans l'ensemble constitué par les dextrines indigestibles, les polydextroses, les oligofructoses, les oligosaccharides d'isomaltulose, et les fructo-oligosaccharides, des hydrolysats de gomme de guar, des alginates hydrolysés, des gommes hydrolysées, la cellulose hydrolysée, ou des mélanges de ceux-ci ;

dans laquelle le système de liants oblige la gomme à mâcher au moins à conserver les caractéristiques de mastication d'une gomme à mâcher contenant une cire.

2. Gomme à mâcher selon la revendication 1, dans laquelle les oligosaccharides non cariogènes ont un degré moyen de polymérisation d'au moins 3.

3. Gomme à mâcher selon la revendication 1 ou la revendication 2, dans laquelle les oligosaccharides non cariogènes ont un degré moyen de polymérisation compris entre 5 et 50.

4. Gomme à mâcher selon l'une quelconque des revendications 1 à 3, dans laquelle au moins un oligosaccharide non cariogène est faiblement utilisé par le *Streptococcus mutans*.

5. Gomme à mâcher selon l'une quelconque des revendications 1 à 4, dans laquelle le système de liants est constitué de 40 à 100 % en poids d'un oligosaccharide non cariogène.

6. Gomme à mâcher selon l'une quelconque des revendications 1 à 3, dans laquelle au moins un des oligosaccharides est un oligosaccharide faiblement calorique qui a un degré moyen de polymérisation d'au moins 3.

7. Gomme à mâcher selon l'une quelconque des revendications 1 à 6, dans laquelle les ingrédients de la gomme à mâcher solubles dans l'eau comprennent des édulcorants, des émulsifiants et des agents de charge, et la gomme à mâcher comprend, en outre, des agents aromatisants solubles dans l'huile, des charges, des émollients synthétiques et des anti-oxydants.

8. Gomme à mâcher selon l'une quelconque des revendications 1 à 7, dans laquelle le système de liants constitue de 10 à 80 % en poids de la gomme.

9. Gomme à mâcher selon l'une quelconque des revendications 1 à 8, comprenant des élastomères choisis dans l'ensemble constitué par les copolymères de styrène-butadiène, le polyisoprène, le polyisobutylène, les copolymères d'isobutylène-isoprène (butylcaoutchouc), le caoutchouc naturel, la chicle, les substances qu'on connaît sous les noms de jelutong, balata, guttapercha, lechi caspi et sorva, ou des mélanges de ceux-ci.

10. Gomme à mâcher selon la revendication 9, dans laquelle les élastomères sont choisis dans l'ensemble constitué par un copolymère de styrène-butadiène ayant un rapport molaire du styrène au butadiène compris entre 2:1 et 1:2 et un poids moléculaire moyen en poids compris entre 10 000 et 200 000, un polyisoprène ayant un poids moléculaire moyen en poids compris entre 10 000 et 250 000, un polyisobutylène ayant un poids moléculaire moyen en poids compris entre 10 000 et 250 000, un copolymère d'isobutylène-isoprène ayant un rapport molaire de l'isobutylène à l'isoprène compris entre 20:1 et 1:20 et un poids moléculaire moyen en poids compris entre 10 000 et 250 000, ou des mélanges de ceux-ci.

11. Gomme à mâcher selon l'une quelconque des revendications 1 à 10, dans laquelle le système de liants est présent à raison de 10 à 70 % en poids de la gomme, ledit système de liants comprenant de 40 à 90 % en poids d'oligosaccharides non cariogènes.

12. Gomme à mâcher selon l'une quelconque des revendications 1 à 11, comprenant de 15 à 75 % en poids d'une base de gomme dépourvue de cire de pétrole et de 10 à 80 % en poids d'un système de liants, dans laquelle le système de liants comprend au moins 40 % en poids d'au moins un oligosaccharide non cariogène ; de 0,001 à 50 % en poids d'édulcorants ; de 0,01 à 10,0 % en poids d'ingrédients aromatisants ; de 0,5 à 25 % en poids d'émulsifiants, d'émollients, de colorants, d'agents de blanchiment et d'agents de charge, dans laquelle le système de liants oblige la gomme à mâcher au moins à conserver les caractéristiques de mastication d'une gomme à mâcher contenant une cire.

13. Gomme à mâcher selon l'une quelconque des revendications 1 à 12, dans laquelle le plastifiant d'élastomère est présent dans la base de gomme en une quantité comprise entre 0,5 et 40 % en poids, ledit plastifiant étant choisi au moins parmi un des éléments de l'ensemble constitué par les esters de colophane naturelle, les esters de glycérol et de colophane polymérisée, les esters de glycérol et de colophane partiellement hydrogénée, les esters de glycérol et de colophane partiellement dimérisée, les esters de glycérol et de colophane, les esters de pentaérythritol et de colophane partiellement hydrogénée, les esters méthyliques et les esters méthyliques partiellement hydrogénés de colophane, les esters de pentaérythritol et de colophane et les résines terpéniques provenant d'alpha-pinène, de bêta-pinène et/ou de d-limonène.

14. Gomme à mâcher selon l'une quelconque des revendications 1 à 13, dans laquelle les charges de la base de gomme sont présentes en une quantité comprise entre 2,0 et 25,0 % en poids et sont choisies parmi au moins un des éléments de l'ensemble constitué par le carbonate de calcium, le calcaire broyé, les silicates, les silicates d'aluminium, la silice, l'alumine, le talc, le dioxyde de titane, les phosphates mono-, di- et tricalciques, la cellulose et les argiles.

15. Comme à mâcher selon l'une quelconque des revendications 1 à 14, dans laquelle la base de gomme contient de 2,0 à 30 % en poids d'au moins une graisse, une huile ou un émollient, choisi(e) dans l'ensemble constitué par le suif, le suif hydrogéné, les huiles végétales hydrogénées, les huiles végétales partiellement hydrogénées, le beurre de cacao, le monostéarate de glycérol, le triacétate de glycérol, la lécithine, les mono-, di- et triglycérides, les monoglycérides acidulés, et les acides gras choisis dans l'ensemble constitué par l'acide stéarique, l'acide palmitique, l'acide oléique, l'acide linoléique, l'acide laurique, l'acide myristique, l'acide arachidique, l'acide linolénique, l'acide caproïque, l'acide caprylique, l'acide butyrique, l'acide décénoïque, l'acide gadoléique, ou des mélanges de ceux-ci.

16. Gomme à mâcher selon l'une quelconque des revendications 1 à 15, dans laquelle la base de gomme contient de 0,5 à 25 % en poids d'au moins un polymère vinylique choisi parmi au moins un des éléments de l'ensemble constitué par l'acétate de polyvinyle, un acétate de polyvinyle partiellement hydrolysé ayant un poids moléculaire moyen en poids compris entre 2 000 et 100 000, l'alcool polyvinylique, un polyéthylène ayant un poids moléculaire moyen en poids compris entre 2 000 et 50 000, et des copolymères d'acétate de vinyle et de laurate de vinyle ayant une teneur en laurate de vinyle comprise entre 5 et 50 % en poids, par rapport au polymère, et un poids moléculaire moyen en poids compris entre 1 000 et 100 000, et ladite gomme à mâcher contenant de 0,1 à 3,5 % en poids d'au moins une cire naturelle choisie dans l'ensemble constitué par la cire de candelilla, la cire de carnauba, l'ozocérite, l'oricury, la cire d'abeille, la cire de son de riz, la cire du Japon et la cire de jujube.

17. Gomme selon l'une quelconque des revendications 1 à 16, dans laquelle les édulcorants d'intensité élevée sont choisis dans l'ensemble constitué par le sucralose, l'aspartame, le stévioside, l'acésulfame K, l'alitame, la saccharine et ses sels, l'acide cyclamique et ses sels, la glycyrrhizine, les dihydrochalcones, la thaumatine, la monelline, ou des mélanges de ceux-ci.

18. Gomme à mâcher selon l'une quelconque des revendications 1 à 17, dans laquelle l'édulcorant d'intensité élevée est présent dans la gomme en une quantité de 0,01 à 2,0 % en poids.

19. Gomme à mâcher selon l'une quelconque des revendications 1 à 18, dans laquelle le système de liants comprend au moins 40 % en poids de dextrine indigestible.

20. Gomme à mâcher selon l'une quelconque des revendications 1 à 18, dans laquelle le système de liants comprend au moins 40 % en poids de polydextrose.

21. Gomme à mâcher selon l'une quelconque des revendications 1 à 18, dans laquelle le système de liants comprend au moins 40 % en poids d'oligofructose.

22. Gomme à mâcher selon l'une quelconque des revendications 1 à 18, dans laquelle le système de liants comprend au moins 40 % en poids d'oligosaccharides d'isomaltulose.

23. Gomme à mâcher selon l'une quelconque des revendications 1 à 18, dans laquelle le système de liants comprend au moins 40 % en poids de fructo-oligosaccharides.

24. Gomme à mâcher selon l'une quelconque des revendications 1 à 18, dans laquelle le système de liants comprend au moins 40 % en poids d'au moins une double combinaison d'oligosaccharides choisis dans l'ensemble constitué par les dextrines indigestibles, les polydextroses, les oligofructoses, les oligosaccharides d'isomaltulose et les fructo-oligosaccharides.

25. Gomme à mâcher selon l'une quelconque des revendications 1 à 24, comprenant :

| Ingrédients | | | % en poids |
|---|---|---|---|
| | a) | base de gomme sans cire | de 20 à 50 |
| | b) | système de liants constituant au moins 35 % en poids du système de liants d'oligosaccharides non cariogènes | de 10 à 50 |
| | c) | édulcorants | de 0,005 à 50 |
| | d) | arômes | de 0,5 à 50 |
| et | | | |
| | e) | ingrédients facultatifs choisis dans l'ensemble constitué par : | de 0,1 à 40 |
| | | des émollients synthétiques | de 0,1 à 20 |
| | | des charges | de 0,0 à 30 |
| | | des émulsifiants | de 0,0 à 2 |
| | | des colorants et des matières tinctoriales | de 0,0 à 1,0 |
| | | des anti-oxydants | de 0,0 à 1,0 |
| | | des agents de charge non sucrants | de 0,0 à 39 |
| | | des agents renforçant l'arôme | de 0,0 à 2,0 |
| | | des acidulants alimentaires | de 0,0 à 3,0 |
| | | des substances médicinales/pharmaceutiques | de 0,0 à 2,5 |
| le système de liants obligeant la gomme à mâcher au moins à conserver les caractéristiques de mastication d'une gomme à mâcher contenant une cire. | | | |

26. Gomme à mâcher selon l'une quelconque des revendications 1 à 25, dans laquelle la base de gomme comprend : de 10 à 90 % en poids d'élastomères, de 0 à 50 % en poids de plastifiant d'élastomères, de 1 à 40 % en poids de graisses et d'huiles, de 0,5 à 40 % en poids de charges/agents de texture, de 0,5 à 40 % en poids de polymères vinyliques, de 0,5 à 5,0 % en poids d'émulsifiants, de colorants, d'émollients synthétiques, d'agents de blanchiment et d'anti-oxydants, et de 0 à 5,0 % en poids de cires naturelles.

27. Gomme selon l'une quelconque des revendications 1 à 25, dans laquelle la base de gomme comprend : de 15 à 75 % en poids d'élastomères, de 0 à 40 % en poids de plastifiant d'élastomères, de 5 à 35 % en poids de graisses et d'huiles, de 1,0 à 3,0 % en poids de charges/agents de texture, de 1,0 à 30 % en poids de polymères vinyliques, de 0,5 à 5,0 % en poids d'émulsifiants, de colorants, d'émollients synthétiques, d'agents de blanchiment et d'anti- oxydants, et de 0,0 à 3,5 % en poids de cires naturelles.

28. Gomme à mâcher selon la revendication 13, dans laquelle la base de gomme comprend : de 15 à 65 % en poids d'élastomères, de 0 à 40 % en poids de plastifiant d'élastomères, de 1,0 à 30,0 % en poids de graisses et d'huiles, de 1,0 à 30,0 % en poids de charges/agents de texture, de 2,0 à 30,0 % en poids de polymères vinyliques, de 0,1 à 5,0 % en poids d'émulsifiants, de colorants, d'agents de blanchiment, d'anti-oxydants, et de 0 à 3,5 % en poids de cires naturelles.

29. Gomme selon l'une quelconque des revendications 1 à 24, dans laquelle la base de gomme comprend :

| Ingrédients | | % en poids |
|---|---|---|
| a) | élastomères | de 20 à 50 |
| b) | plastifiant d'élastomères | de 10 à 50 |
| c) | graisses et huiles | de 5 à 30 |
| d) | polymères vinyliques | de 5 à 30 |
| e) | charges | de 5 à 25 |
| f) | émulsifiants, anti-oxydants, matières tinctoriales, colorants, agents de blanchiment, émollients | de 0,1 à 10 |
| g) | cires naturelles | de 0,0 à 3,5. |

**30.** Gomme selon l'une quelconque des revendications 1 à 8, dans laquelle :

a) la base de gomme dépourvue de cire comprend des élastomères synthétiques choisis dans l'ensemble constitué par :

1) des copolymères de styrène-butadiène ayant un rapport molaire du styrène au butadiène de 3:1 à 1:3 et un poids moléculaire moyen en poids compris entre 10 000 et 80 000 ;
2) un polyisoprène ayant un poids moléculaire moyen en poids de 10 000 à 85 000 ;
3) un polyisobutylène ayant un poids moléculaire moyen en poids de 10 000 à 90 000 ;
4) un copolymère d'isobutylène-isoprène ayant un poids moléculaire moyen en poids de 10 000 à 90 000 ; et
5) des mélanges de ceux-ci ; et

b) la base de gomme dépourvue de cire comprend, en outre, des polymères vinyliques choisis parmi un acétate de polyvinyle ayant un poids moléculaire moyen en poids de 10 000 à 100 000, des copolymères d'acétate de vinyle-laurate de vinyle ayant un pourcentage en poids de laurate de vinyle compris entre 5 et 50 % en poids et un poids moléculaire moyen en poids compris entre 10 000 et 75 000, ou des mélanges de ceux-ci ; et

c) la base de gomme dépourvue de cire comprend, en outre, des plastifiants d'élastomères choisi dans l'ensemble constitué par les esters de glycérol et de colophane hydrogénée, les esters de glycérol et de colophane partiellement hydrogénée, les esters de glycérol et de colophane polymérisée, les esters de glycérol et de colophane, les esters de glycérol et de colophane dimérisée ou partiellement dimérisée, les esters de pentaérythritol et de colophane, les esters de pentaérythritol et de colophane partiellement hydrogénée, les esters de pentaérythritol et de colophane hydrogénée, les esters méthyliques de colophane, les esters méthyliques de colophane partiellement hydrogénés, les résines terpéniques provenant d'$\alpha$-pinène, de $\beta$-pinène et/ou de d-limonène ; ou un mélange quelconque de ceux-ci ; et

d) la base de gomme dépourvue de cire comprend, en outre, des charges choisies dans l'ensemble constitué par l'oxyde, l'hydroxyde et le carbonate de magnésium, ou des mélanges de ceux-ci, l'oxyde, l'hydroxyde et le carbonate de calcium, ou des mélanges de ceux-ci, le calcaire, le silicate de magnésium, le silicate d'aluminium, le silicate de calcium, les argiles, l'alumine, la silice, le talc, le dioxyde de titane, le phosphate mono-, di- et/ou tricalcique, les dérivés cellulosiques, et une combinaison quelconque de ceux-ci ; et

e) la base de gomme dépourvue de cire comprend, en outre, des graisses, des huiles et des émollients, choisis dans l'ensemble constitué par le suif, le suif hydrogéné, les huiles végétales, les huiles végétales partiellement hydrogénées, les huiles végétales hydrogénées, le beurre de cacao, le monostéarate de glycérol, le triacétate de glycérol, la lécithine, les mono-, di- et/ou triglycérides, les monoglycérides acétylés, les acides gras et/ou leurs esters méthyliques/éthyliques, ou un mélange quelconque de ceux-ci ; et

f) la gomme à mâcher dépourvue de cire comprend, en outre, des édulcorants choisis dans l'ensemble constitué par le sucralose, l'aspartame, le stévioside, l'acésulfame K, l'alitame, la saccharine et ses sels, l'acide cyclamique et ses sels, la glycyrrhizine, les dihydrochalcones, la thaumatine, la monelline, le saccharose, le glucose, le fructose, le maltose, la dextrine, le sucre interverti, le galactose, des solides de sirop de maïs, le sorbitol, le mannitol, le xylitol, des hydrolysats hydrogénés d'amidon, le maltitol, ou un mélange quelconque de ceux-ci.

31. Gomme à mâcher selon la revendication 30,' comprenant, en outre, de 0,1 à 5,0 % en poids de cires naturelles choisies dans l'ensemble constitué par la cire de candelilla, la cire de carnauba, l'ozocérite, l'oricury, la cire d'abeille, la cire de son de riz, la cire du Japon, la cire de jujube, ou des mélanges de celles-ci.

32. Procédé de fabrication d'une gomme à mâcher dépourvue de cire de pétrole, comprenant les étapes consistant à mélanger successivement les ingrédients de la base de la gomme dépourvue de cire de pétrole, comprenant :

a) 1 à 40 % de graisses et d'huiles, en une masse homogène fondue ; et ensuite, l'addition successive aux parties fondues de :
b) des ingrédients de gomme à mâcher solubles dans l'eau ;
c) un édulcorant comprenant un mélange d'au moins un édulcorant d'intensité élevée, au moins 20 fois plus sucrant que le saccharose, et d'au moins un édulcorant de charge choisi dans l'ensemble constitué par le sorbitol, le mannitol, le xylitol, le maltitol, le lactitol, l'isomaltulose hydrogéné et un hydrolysat hydrogéné d'amidon ; et
d) de 5 à 90 % en poids, par rapport à la gomme à mâcher, d'un système de liants à base d'oligosaccharides non cariogènes, qui comprend au moins environ 35 % en poids, par rapport au système de liants, d'au moins un oligosaccharide non cariogène choisi dans l'ensemble constitué par les dextrines indigestibles, les polydextroses, les oligofructoses, les oligosaccharides d'isomaltulose, et les fructo-oligosaccharides, des hydrolysats de gomme de guar, des alginates hydrolysés, des gommes hydrolysées, la cellulose hydrolysée, ou des mélanges de ceux-ci ; mélanger le tout pendant un laps de temps suffisant pour obtenir une gomme à mâcher fondue et ensuite, retirer la gomme à mâcher fondue, l'extruder ou la façonner et la refroidir, formant ainsi une gomme à mâcher façonnée dépourvue de cire de pétrole, contenant un système de liants à base d'oligosaccharides non cariogènes, ledit système de liants obligeant la gomme à mâcher au moins à conserver les caractéristiques de mastication d'une gomme à mâcher contenant une cire.

33. Procédé de fabrication d'une gomme à mâcher selon la revendication 32, comprenant les étapes consistant à mélanger, à une température suffisante pour maintenir un état fondu, dans n'importe quel ordre, les ingrédients suivants :

de 10 à 90 % en poids d'élastomères,
de 0 à 50 % en poids de plastifiants d'élastomères,
de 1 à 40 % en poids de graisses, d'huiles et d'émollients,
de 0,5 à 40 % en poids de charges/agents de texture,
de 0,5 à 40 % en poids de polymères vinyliques,
de 0,0 à 5 % en poids de cires naturelles,

dans un mélangeur conçu et équipé pour fabriquer une base de gomme à mâcher ; et ensuite, mélanger lesdits ingrédients pendant un laps de temps suffisant pour obtenir une masse homogène fondue qu'on refroidit ensuite et qu'on coule pour obtenir une base de gomme façonnée ; et ensuite, malaxer la base de gomme, à une température suffisante au moins pour ramollir ladite base de gomme, puis la mélanger, dans n'importe quel ordre, avec les ingrédients de la gomme à mâcher solubles dans l'eau, comprenant un système de liants à base d'oligosaccharides non cariogènes, obtenant ainsi un mélange fondu de gomme à mâcher sans cire de pétrole ressemblant à une pâte, et ensuite, y ajouter des agents aromatisants sélectionnés qu'on mélange avec celui-ci pour obtenir une gomme à mâcher fondue aromatisée ressemblant à une pâte ; et ensuite, amener la gomme aromatisée dans des dispositifs de façonnage, refroidir et récupérer ladite gomme à mâcher dépourvue de cire de pétrole ; le système de liants obligeant la gomme à mâcher au moins à conserver les propriétés de mastication d'une gomme à mâcher contenant une cire.

34. Procédé selon la revendication 32 ou la revendication 33, dans lequel les ingrédients de la gomme à mâcher solubles dans l'eau comprennent : de 0,001 à 70 % en poids d'édulcorants, de 5,0 à 90 % en poids d'un système de liants, et dans lequel, en outre, la gomme à mâcher contient de 0,01 à 10 % en poids d'agents aromatisants.

35. Procédé selon l'une quelconque des revendications 32 à 34, dans lequel les composants a), b), c) et d) et des composants supplémentaires de la gomme sont conformes a l'une quelconque des revendications 2 à 31.